# EUROPEAN PATENT SPECIFICATION

(11) **EP 4 190 667 B1**
(45) Date of publication and mention of the grant of the patent: **15.01.2025**
(21) Application number: 22209459.1
(22) Date of filing: 24.11.2022
(51) Int. Cl.: B61G 5/10

(54) **INTERFACE SYSTEM**
SCHNITTSTELLENSYSTEM
SYSTÈME D'INTERFACE

(30) Priority: 02.12.2021 GB 202117383
(43) Date of publication of application: 07.06.2023
(73) Proprietor: Kinghorn, John, Brockenhurst Hampshire SO42 7RF (GB)
(72) Inventor: Kinghorn, John, Brockenhurst Hampshire SO42 7RF (GB)
(74) Representative: Cleveland Scott York

(56) References cited:
- WO-A1-2017/116466
- CN-A- 108 944 527
- CN-U- 208 896 897
- CN-U- 209 159 465
- DE-U1- 202012 013 259
- GB-A- 2 590 980

## Description

This invention relates to an interface system. In particular, the invention relates to an interface connector that is moveable between a stowed position and an in-use position and is extendable, providing a combined electrical power and data interface for coupling to the electrical power and data connections of a vehicle.

### Background of the Invention

Modern passenger trains contain an extensive set of interface connections to distribute electrical and pneumatic energy, control signals and diagnostic data within and between the various vehicles. These interfaces are needed to ensure the correct functioning of a multitude of subsystems within the train when the train is being operated.

In addition to travelling, however, all rail vehicles spend some of their time stationary in well-defined positions. These positions might include at a station platform preparing for the next service, within a depot being examined or cleaned, in a siding temporarily out of use, etc. When the vehicles are stationary, the optimum interfaces are not necessarily the same as those in use when the train is moving. For example, if the train is diesel operated, it might be highly desirable to shut down its engine to reduce its noise and pollution, and obtain electrical power from a land-based source instead. Such an electrical supply is also useful for unpowered carriages if the locomotive hauling them is uncoupled to perform some other task.

The technique of providing a land-based electrical power source is well established. For example, a generator may supply electrical power to the train when the train is moving, but when the train is stationary, the generator is isolated and electrical power is instead supplied by a 'shore supply' connector socket attached to a cable that is manually plugged into a corresponding interface plug on the train. Similar techniques are utilised for accommodating data transfer to and from the train. When the train is moving, all kinds of sensors and control functions in the vehicles of the train may be monitored and the results stored in local data processing systems. When the train is stationary, an analytical computer system may be manually plugged into a special interface on the train via plug and socket connectors, allowing key operating parameters to be investigated and faults identified. Electrical power and/or data interfaces are typically designed for particular trains, resulting in a multiplicity of standards to be dealt with. Well-known system architectures allow for all kinds of rail vehicles in any combination to be coupled together freely in a compatible way.

However, there remains a need to improve the interoperability of all kinds of rolling stock in a given railway network, as well as the land-based interfaces utilised at stationary depots, which was once normal in a much simpler era a century ago. Further, coupling stationary vehicles with land-based interfaces can be somewhat onerous and time consuming, given the need to manually couple separate power and data interfaces to said vehicles.

Further still, in some cases, it is desirable to connect land-based interfaces to the to rail vehicles that are stationary on a section of a track which continues beyond that location. For example, trains stopped at through platforms at stations where these trains terminate but other services continue elsewhere, or freight trains detaching wagons from their rear in loop sidings, the rest of the train then resuming its journey in the same direction.

D1 (DE 10 2012 013259 U1) relates to a testing device for testing at least one system of a rail vehicle, with a coupling interface, which is intended to be coupled to a nose coupling unit of the rail vehicle in order to achieve a coupling of the rail vehicle to be tested with another rail vehicle, and with a test unit connected to the coupling interface, which is intended to at least test at least one property of the system via the nose coupling unit in the coupled state.

D2 (CN 209 159 465 U) relates to an anti-collision charging pile for an automobile. The charging pile comprises a base, a weighbridge and a charging pile body. The outer contour of the base table is of a rectangular structure. A groove table with a rectangular inner contour is arranged above the base table; landslides are arranged on the edges, away from the groove tables, of the base tables; the landslide angle is less than 40 degrees; a wagon balance is arranged on the upper surface of the base; a bottom plate is fixed to the side, adjacent to the weighbridge, of the bottom end in the groove table through screws.

D3 (CN 108 944 527 U) relates to an electric vehicle charging pile with a rain shielding function, which is applied in the technical field of electric vehicle parts. A mounting shaft is arranged in an accommodation cavity of the electric vehicle charging pile with rain shielding function; a driving gear is arranged on a rotating shaft of a motor, the charging pile body is movably connected with the mounting shaft, a driving tooth portion is arranged on a driving surface at the lower end of the charging pile body, the driving gear meshes with the driving tooth portion, the motor is connected to a control unit, and a humidity sensor on the upper end surface of the charging pile body is connected to the control unit.

D4 (CN 208 896 897 U) relates to n embedded barrier-free charging pile. Charging pile body, The bottom of the charging pile body is hinged to the ground. a groove for embedding the charging pile is formed in the ground; A cover plate is arranged at the opening of the groove, the charging pile comprises a box body, the box body comprises a back plate, the back plate is provided with a folded edge whichis bent forwards and extends, the box body further comprises a front panel, the front panel comprises an upper panel, the upper panel is a ridge plate with a bend, the bend angle of the ridge plate is150 +/-10 degrees, and charging head connectors are arranged on planes on the two sides of the ridge plate.

D5 (WO 2017/116466 A1) relates to docking or parking systems for parking modal units such as rail cars, boats, ships, and airplanes. The systems provide guidance assistance to maneuver the vehicles into terminal positions by spatial sensing and thereafter receive and hold the vehicles in position.

D6 (GB 2 590 980 A) relates to a deployable electric vehicle charging point 10 having a housing for burying underground and a post with a power distribution connector. The post is mounted in the housing about a pivotal axis and is movable about this axis between an inoperative position within the housing and an operative position.

The present invention aims to overcome or at least ameliorate one or more of the problems set out above.

### Summary of the Invention

According to one aspect of the present invention, there is provided an interface connector for connecting to a rail vehicle, the rail vehicle comprising a coupling arrangement for coupling electrical power and data processing connections of the rail vehicle to the interface connector, the interface connector comprising: a controller; a coupling arrangement for coupling land-based electrical power and data processing connections to the rail vehicle; means for connecting the coupling arrangement of the interface connector to the coupling arrangement of the rail vehicle upon contact between the coupling arrangements; and a stowing arrangement that is arranged to be actuated by the controller to move the coupling arrangement of the interface connector between a stowed position and an in-use position, wherein, in the stowed position, a top surface of the coupling arrangement of the interface connector is positioned below a lowest bottom surface of the rail vehicle, and in the in-use position, the coupling arrangement of the interface connector is positioned such that it is substantially on the same horizontal axis as the coupling arrangement of the rail vehicle.

The interface connector provides several advantages. Firstly, there is no need for special interconnection wiring to plugs and sockets in the vehicles: the interfaces already in place for sharing power, control signals and data between vehicles when coupled also can be used for interconnection to land-based systems instead. In effect, every vehicle conforming to the above-described coupler head and interfacing standards is already equipped with a compatible combined shore power supply and data connector. Further, connection and disconnection of the land-based system to and from the vehicles may occur automatically and can be controlled from within any of the coupled vehicles or from any local or remote control point or workstation. This removes the need for a member of staff in the vicinity to manually plug in or unplug connectors. Further, the comprehensive range of interfaces available through the coupler heads allows many different functions to be performed simultaneously, perhaps with different actions in different vehicles of the coupled formation. Further, more than one stationary train can be serviced from a single land-based installation of the interface connector, by the simple method of temporarily coupling the trains together, an action which does not require further vehicle movement when the train must uncouple. The interface connector provides a combined power and data interface for vehicles to couple their power and data connection to land-based power and data processing functions. Compared with conventional methods of manually plugging in cables into appropriate sockets in vehicles, the interface connector allows the coupling process to be suitably controlled, and is thus more accurate, safer and less time consuming. The connection between the vehicle and the interface connector is also more robust than a cable, which could be cut easily. Further, land-based electrical power and data can be provided to a railway vehicle on a through line railway track, as the interface connector can be stowed away after use allowing the vehicle to pass. The interface connector is particularly useful for autonomous robotic vehicles, as connection and disconnection can be initiated automatically with no need for human intervention.

Preferably, the coupling arrangement comprises: a housing with a connection interface for coupling land-based electrical power and data processing connections to the vehicle, wherein the stowing arrangement is arranged to move the housing between the stowed position and the in-use position; and wherein, in the stowed position, a top surface of the housing is positioned below a lowest bottom surface of the vehicle, and in the in-use position, the connection interface is positioned such that it is substantially on the same horizontal axis as the coupling arrangement of the vehicle. The stowing arrangement may comprise: a body for mounting the stowing arrangement to a surface; and a height adjusting means for adjusting the height of the housing relative to a ground surface.

Preferably, the height adjusting means comprises: at least one elongate leg pivotally connected via bearing arrangements at one end, to one end of the housing, and at the other end, to the body; at least one elongate leg pivotally connected via bearing arrangements at one end, to the other end of the housing, and at the other end, to a mounting fixture for mounting the leg to a ground surface; and a driving means that is arranged to be actuated by the controller to rotate the bearing arrangement of the leg that is connected to the body to pivot the leg about the bearing arrangement between a horizontal position and a vertical position, wherein, in the horizontal position, the housing is positioned in the stowed position, and in the vertical position, the housing is positioned in the in-use position. In other arrangements, there may be other suitable types of height adjusting mechanism to raise the housing between the in-use and stowed positions, for example, a robust threaded or telescopically driven arrangement.

The driving means may comprises: a piston pivotally connected at one end to a rotatable part of the bearing arrangement, and connected at the other end to a cylinder that is mounted to the body for driving the piston. Preferably, the cylinder is pneumatic, but other suitable types of cylinder may used, and other suitable types of driving mechanisms may be used to drive the bearing arrangement.

The driving means may further comprise: a tension bar for facilitating rotation of the bearing arrangement, the tension bar being pivotally connected at one end to a rotatable part of the bearing arrangement, and connected at the other end to a biasing means that is mounted to the body for biasing the tension bar. The tension bar may be biased such that: the tension bar rotatably draws the bearing arrangement in the same direction as the piston when the leg is moved from the horizontal position to the vertical position; and the tension bar rotatably draws the bearing arrangement in the opposite direction to the piston when the leg is moved from the vertical position to the horizontal position.

Preferably, in the stowed position, the housing, the body and the legs are flush with one another. In other arrangements, these components may not be substantially flush.

Preferably, the housing and/or the at least one leg connected between the housing and the mounting fixture comprise an obstacle detection means connected to the controller for detecting an obstacle above the housing, the controller being arranged to stop the housing moving into the in-use position in response to an output from the obstacle detection means. In other arrangements, there may be no obstacle detector.

In a preferable arrangement, the obstacle detection means is mounted to the at least one leg such that the obstacle detection means is vertically above the housing as the housing moves from the stowed position into the in-use position.

Preferably, the height adjusting means comprises: a pair of front legs, each leg being connected at one end proximate to a corner of a front end of the housing, and at the other end proximate to a corner of a rear end of the body; and a pair of rear legs, each leg being connected at one end proximate to a corner of a rear end of the housing, and at the other end proximate to a corner of the mounting fixture.

Preferably, the bearing arrangements of the front legs connected to the body are rotatably coupled together. At least one leg may be arranged to accommodate vertical compression and/or extension of the leg.

In a preferable arrangement, the interface connector includes a proximity sensor connected to the controller and arranged to detect the vehicle as the vehicle approaches the interface connector, an output of the proximity sensor corresponding to a position of the vehicle relative to the proximity sensor. Preferably, the proximity sensor is arranged a predetermined distance from the interface connector such that the proximity sensor detects the vehicle when the vehicle is within a connection range of the interface connector. The proximity sensor may comprise a sensing element, the sensing element being provided by the body of the stowing arrangement for detection.

Preferably, the sensing element comprises an optical sensor arrangement, the body of the stowing arrangement having a light transmissible cover, the optical sensor arrangement being arranged within the body of the stowing arrangement for detection via the covering. The optical sensing element could however be another suitable type of sensor that is able to detect the presence of an object without physical contact, such as a capacitive or inductive sensor etc. In some cases, there may be no cover provided by the housing, the sensor arrangement instead being provided on the housing for detection.

Preferably, the optical sensor arrangement comprises: an emitter for emitting light; and a pair of receivers for receiving emitted light, an amount of emitted light received by each receiver corresponding to a position of the coupling arrangement of the vehicle relative to the receivers, wherein the emitter and the pair of receivers are arranged colinearly relative to each other, one of the receivers being at an end of the body of the stowing arrangement proximate to the housing and the other receiver being at a distal end of the body of the stowing arrangement, the emitter being arranged between the pair of receivers.

In a preferable arrangement, the coupling arrangement of the vehicle comprises a covering arrangement that is arranged to move between a closed position, for covering the coupling arrangement when it is out of use to protect and/or seal the coupling arrangement, and an open position, for exposing the coupling arrangement when it is in use; and wherein the interface connector further comprises a second optical sensor arrangement, the first optical sensor arrangement being positioned in a central region of the housing for detecting the covering arrangement in the closed position, the second optical sensor arrangement being positioned either side of the central region of the housing for detecting the covering arrangement in the open position.

In one arrangement, the controller or the vehicle is arranged to initiate connection between the coupling arrangement of the interface connector and the coupling arrangement of the vehicle based on the output of the proximity sensor. In this way, the coupling process between the vehicle and the interface connector can be initiated automatically in response to an output of the proximity sensor.

In a preferable arrangement, the interface connector further comprises a display means connected to the controller, the controller being arranged such that the display means produces a visual warning signal in response to the output of the proximity sensor. A colour of the warning signal may correspond to a position of the vehicle relative to the proximity sensor, the colour being determined by the output of the proximity sensor. In this way, the visual warning signal can indicate when a vehicle is in a suitable position for connecting to the interface connector.

Preferably, the interface connector further comprises: a coupling body having a head and a shank, the housing having an opening for receiving the coupling body therethrough, the coupling body being mounted to the housing via the opening such that the shank is within the housing, the mounting arrangement being such that the coupling body is moveable relative to the housing between a retracted position and an extended position, a distance between the head of the coupling body and the support housing increasing as the coupling body moves from the retracted position towards the extended position; and an extending mechanism that is arranged to be actuated by the controller to move the coupling body any distance between the retracted position and the extended position, wherein the head of the coupling body comprises: the connection interface; and the means for connecting the head to the coupling arrangement of the vehicle upon contact between the head and the coupling arrangement.

Preferably, the shank of the coupling body is mounted to the housing via the extending mechanism, a portion of the shank being in threaded engagement with the extending mechanism, the extending mechanism being mounted to the housing via a bearing arrangement.

Preferably, the interface connector comprises an actuator that is arranged, via the controller, to actuate the extending mechanism to move the coupling body relative to the housing. The actuator may be arranged to rotate the extending mechanism relative to the shank to move the coupling body relative to the housing.

Preferably, the mounting arrangement of the coupling body to the housing is also arranged to allow horizontal movement of the coupling body (i.e., such as via a bearing arrangement).

Preferably, the means for connecting the head of the coupling body to the coupling arrangement of the vehicle is a Scharfenberg coupling arrangement. In some cases, the means for connecting the head of the coupling body to the coupling arrangement of the vehicle may be another suitable mechanical coupling means for connecting the head of the coupling body to the coupling arrangement of the vehicle.

The invention also provides a combination comprising: the interface connector as described above; and a vehicle having a coupling arrangement for coupling electrical power and data processing connections of the vehicle to the interface connector. The coupling arrangement of the vehicle may be moveable relative to the vehicle between a retracted position and an extended position, a distance between the coupling arrangement and the vehicle increasing as the coupling arrangement moves from the retracted position towards the extended position.

The vehicle may be part of a formation comprising one or more other vehicles, the electrical power and data connections between each vehicle being coupled together such that the electrical power and data processing connections of the formation is coupled to the interface connector when the interface connector is coupled to the vehicle.

In one arrangement, the interface connector is mounted between the railway rails such that: the head of the coupling body of the interface connector faces the coupling arrangement of the railway vehicle as the railway vehicle approaches the interface connector; and in the stowed position, a top surface of the coupling arrangement of the interface connector is positioned flush with top surfaces of the rails of the railway track. In this arrangement, preferably, the proximity sensor of the interface connector is mounted to the railway track such that the proximity sensor is between the interface connector and the railway vehicle as the railway vehicle approaches the interface connector, the proximity sensor having a height such that the proximity sensor is below the railway vehicle as the railway vehicle approaches the interface connector.

### Brief Description of the Drawings

Embodiments of the invention will now be described by way of example, with reference to the drawings in which:-
Figure 1a illustrates a perspective view of a interface connector of the present invention mounted in use on a railway track in the stowed position, and Figure 1b illustrates the interface connector of Figure 1a being in the in-use position;
Figure 2a illustrates a perspective view of a interface connector of Figure 1b with the coupling body being in the extended position, and Figure 2b illustrates the interface connector of Figure 2a connected to the coupling arrangement of a vehicle;
Figure 3 illustrates a perspective view of the coupling body of the interface connector;
Figure 4a illustrates a front cross-sectional view and Figure 4b illustrates a side cross-sectional view of the extending mechanism of the interface connector for extending and retracting the coupling body;
Figure 5a illustrates a plan view of Figure 1a and Figure 5b illustrates a side view of the interface connector moving between the stowed position and in the in-use position;
Figure 6 illustrates a plan view of the interface connector in the stowed position without a top cover showing the stowing mechanism therein;
Figure 7a illustrates a perspective view of the coupling between the driving mechanism and the bearing of the strut for raising the interface connector, the interface connector being in the stowed position, and Figure 7b illustrates the interface connector of Figure 7a in the in-use position;
Figures 8a, 8b, 8c, 8d, 8e, 8f illustrate side views of the overall coupling process between the interface connector and a vehicle having a coupling arrangement that is stopped within the connection range of the interface connector;
Figure 9a illustrates a plan view of the proximity sensor mounted on a railway track, and Figure 9b illustrates a perspective view of Figure 9a showing the display head mounted behind the proximity sensor;
Figure 10a illustrates a front end of the display head and Figure 10b illustrates an opposite, rear end of the display head.
Figure 11 illustrates example circuit arrangements for the LED light sources, the photodetectors, and the corresponding drive circuits of the LED's in the display head; and
Figure 12 illustrates a more detailed schematic view of the control centre.

### Detailed Description

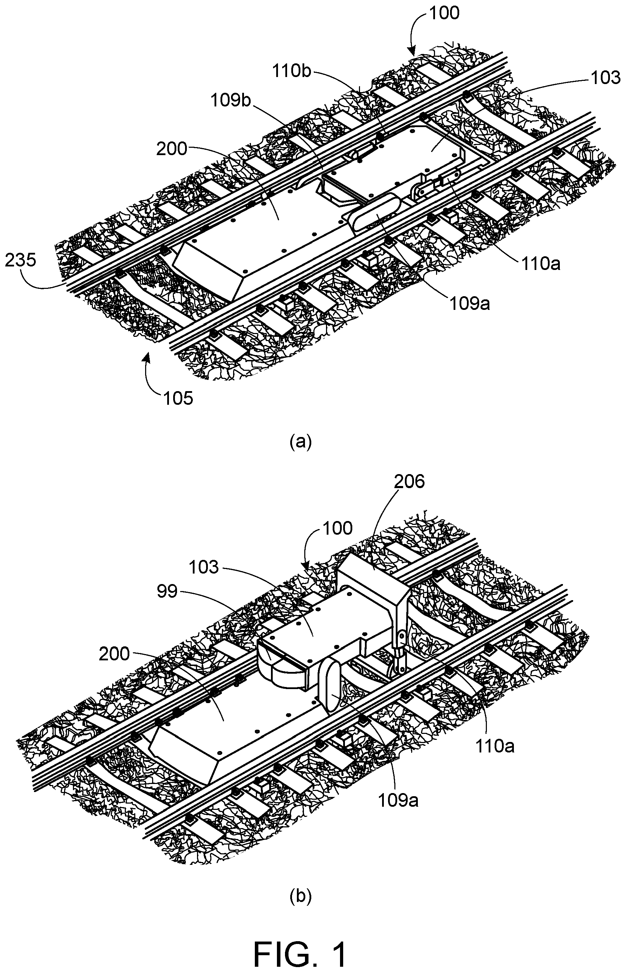

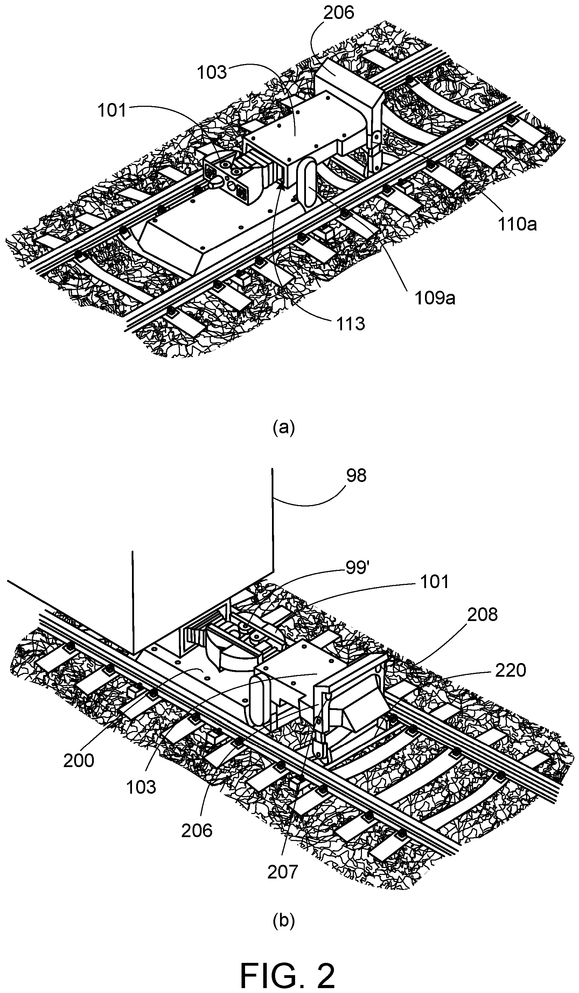

In Figures 1a and 1b, an interface connector 100 in accordance with the present invention is shown mounted on a railway track 105. The interface connector comprises a coupling arrangement 99 that is mounted within a coupler housing 103. A front end of the coupler housing is connected to the housing 200 of a stowing mechanism via a first pair of transversely opposed, pivotally connected struts 109a, 109b. As shown in Figure 2b, the rear end of the coupler housing is connected to a transversely extending cross tie 220 via a second pair of transversely opposed, pivotally connected struts 110a, 110b. In some embodiments, the rear end of the coupler housing also comprises an obstacle detector 206, which will be described later on. The stowing mechanism is arranged to move the coupler housing between a 'stowed' position (shown in Figure 1a) and an 'in-use' position (shown in Figure 1b).

In this embodiment, the stowing mechanism housing 200 and the cross tie 220 are mounted between the rails 235 of a railway track 105. The mechanism housing 200 and cross tie 220 are securely bolted to the track 105, providing a permanent installation of the interface connector at the end of a railway line. However, these fixtures can readily be removed to remove the interface connector from the line as required. In this way, the interface connector can be temporarily mounted to a line, such as on a section of line closed to through traffic, e.g. during new construction or remodelling work, disruption due to infrastructure issues, etc. The configuration of the stowing mechanism, as well as the connections of the struts, will be described later.

The coupling arrangement 99 is arranged to provide a connection interface for connecting to a correspondingly configured coupling arrangement of an approaching vehicle for coupling the electrical power and data connections of the vehicle to local or land-based electrical power and data connections (such as those provided by a railway station for preparing a vehicle for its next service). Local or land-based electrical power and data connections in this context means connections that are provided as local infrastructures such as those that would be used typically in buildings or other static facilities of various kinds. The local infrastructures typically rely on further interconnections to provide their energy, services and facilities, such as those provided by power stations or data processing centres located elsewhere; however sometimes these might be more local in the vicinity of the interface connector, for example a solar energy farm or a computer located in a railway station building. Some or all of the electrical energy and/or data connections provided for the use of the interface connector are configured in conventional fashion to be available in a fixed location, i.e. they are not configured to be easily moved.

The coupling arrangement 99 is further arranged to be moveable relative to the coupler housing 103 between an extended position (shown in Figure 2a) and a retracted position (shown in Figure 1b) for facilitating the connection of the interface connector to the coupling arrangement of an approaching vehicle. The arrangement of the coupling arrangement 99 to provide the connection interface between an approaching vehicle and land-based power supplies and data processing functions will first be described.

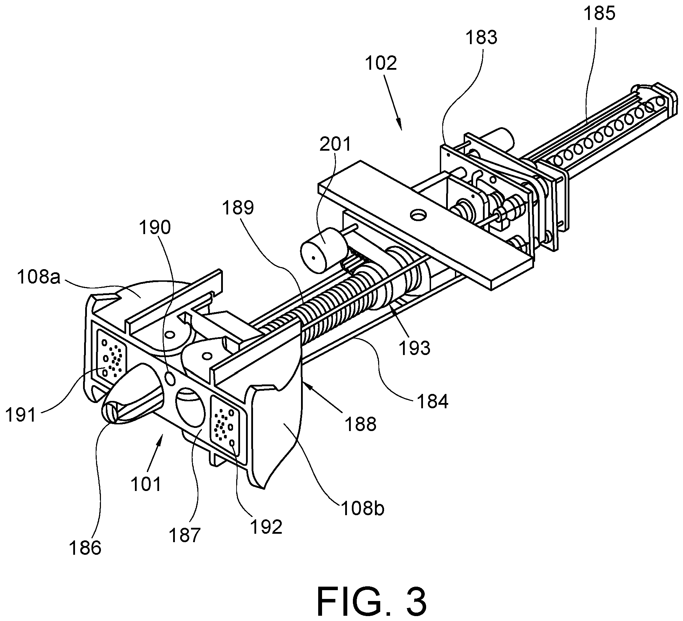

As illustrated in Figure 3, the coupling arrangement 99 comprises a coupling body 102 that is mounted to the coupler housing 103 (not visible in Figure 3). The coupling body 102 comprises a coupler head 101 that is mounted to a distal end 188 of an elongate tube 189. The tube 189 passes through an opening 113 in the coupler housing 103 (seen in Figure 2a) and is mounted to the housing via an extending mechanism 193, the configuration of which will be described later on.

The coupler head 101 has a substantially rectangular body, with an inner face which mounts to the tube 189, and an opposing outer face which is configured as a connection interface 187. The connection interface comprises a central Scharfenberg-style mechanical coupling arrangement 186 and a pair of transversely opposed interface contacts 191, 192. When the interface connector is installed for use, various land-based electrical power and data connections are coupled to the interface contacts. These connections are first terminated within the coupler head 101 and then coupled to the interface contacts. Other land-based connections (such as pneumatic connections) may also be coupled to the connection interface 187.

The land-based electrical power connections comprise high-power connections and low-power connections. The data connections may be for example optical fibre connections. As the coupling body 102, and thus the coupler head 101, is arranged to be moved relative to the coupler housing 103, the terminated land-based connections are configured to accommodate this movement. The low-power and data connections are arranged in a flexible, extensible spiral formation as described in the application EP3590785A1, which is incorporated herein by reference. These spiralled connections 185 pass within the tube 189, before reaching the coupler head 101. The land-based high-power connections are accommodated via an intermediary connection arrangement. The high-power connections are first terminated at a contactor plate 183 that is fixed relative to the coupling body 102. Electrical conductive rods 184 connected between the contactor plate and the coupler head 101 electrically couple the terminated high-power connections to the interface contacts 191, 192. The rods are fixed to the coupler head but may move relative to the contactor plate such that the rods may accommodate movements of the coupling body 102.

As illustrated in Figure 2b, the mechanical coupling arrangement 186 is arranged to mechanically connect to the coupling arrangement 99' of an approaching vehicle 98 upon contact between one another. In this regard, the coupling arrangement of the vehicle has the same structure and functionality as the coupling body 102 described above. In other words, the coupling arrangement of the vehicle comprises a coupler head providing a connection interface that is coupled to the electrical and data connections of the vehicle, the coupler head being extendable relative to the vehicle via an extending mechanism, the function of which is controlled by a controller of the vehicle (such as a train computer). In some cases, the coupling arrangement of the vehicle may not be the same structurally and functionally as the coupling body 102, but may be situationally and functionally similar to the coupling body such that the coupling arrangement is compatible with and is able to connect to the connection interface 187 of the interface connector 100. The mechanical coupling arrangement 186 of the coupler head 101 engages the mechanical coupling arrangement of the approaching vehicle upon contact between the two, mechanically connecting the coupler head 101 to the connection interface of the vehicle.

The mechanical coupling 186 includes facilities for opening a compressed air connection to the vehicle when the interface connector is in use. The compressed air passes through the orifice 190 at the centre of the connection interface 187. One of the interface contacts 191 is arranged as a female 'socket', and the other interface contact 192 as is a male 'plug' with retractable pins. For additional safety and security against the environment, the pins of the interface contact 192 retract when out of use and are covered by a shutter (not shown).

The land-based electrical power and data connections are divided equally between the male and female interface contacts 191, 192 and connected effectively in parallel, so that electrical power and data interfaces provided by the connection interface 187 are duplicated for better reliability. If one of the contacts fails to connect to the vehicle properly, all the power and data interfaces will still function fully (although the maximum current carrying capacity of the high-power bus lines may be reduced).

In this way, the coupling body 102 is arranged to connect to the coupling arrangement 99' of a vehicle 98, providing a connection interface between the electrical power and data connections of the vehicle and the land-based electrical power and data connections coupled to the connection interface 187. In other words, the coupler head 101 is arranged to provide an electrical power and data interface for supplying the vehicle with land-based electrical power and data processing functions (i.e., allows the transfer of data to and from the vehicle).

The arrangement for allowing the coupling body 102 to be moved relative to the coupler housing 103 will now be described. As described above, the tube 189 is mounted to the coupler housing 103 via the extending mechanism 193. The extending mechanism is arranged to be actuated to cause linear motion of the tube 189 (along a longitudinal length of the tube). In this way, the tube, and thus the coupler head, can be moved axially relative to the coupler housing 103.

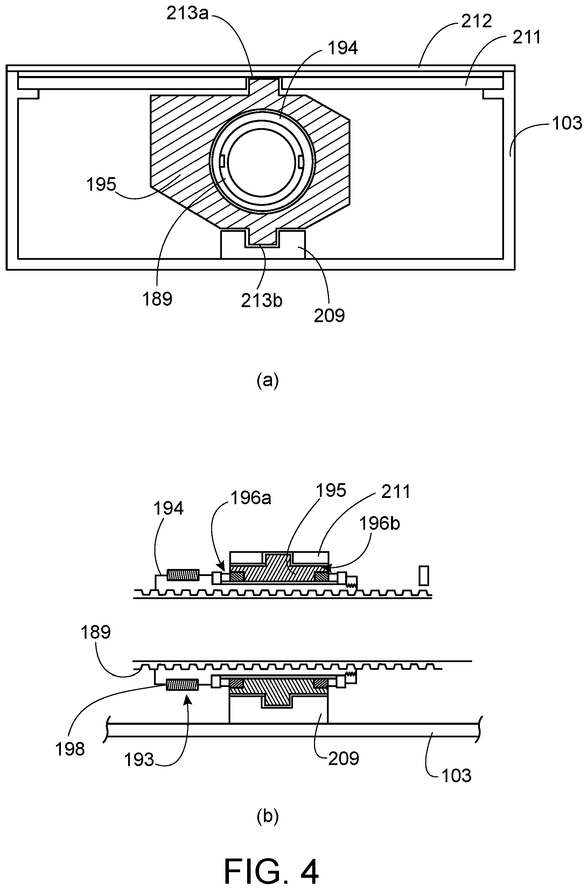

As illustrated in Figures 4a and 4b, the extending mechanism 193 comprises a rotatable cylinder 194 that substantially encircles, and is in threaded engagement with, the tube 189 via a thread on an outer surface of the tube that is received by complementary shaped threading on an inner surface of the cylinder. The cylinder passes through the bore of a support block 195 and is mounted to the same via bearing arrangements 196a, 196b (such as thrust bearings) such that the cylinder is constrained axially but may rotate (along a longitudinal length of the cylinder) relative to the support block. The support block is also arranged to constrain the tube 189 rotationally (such as grooves on the tube receiving or mating with complementary shaped protrusions provided by the support block). In this way, the tube 189 is constrained rotationally but allowed to move axially (along a longitudinal length of the tube) such that rotation of the cylinder causes axial movement of the tube 189, and thus the entire coupling body 102.

The tube 10, cylinder 194 and support block 195 comprise a structurally robust material, such as metal.

The support block 195 is mounted to the coupler housing 103 via a transversely extending cross bar 211 and mounting block 209. The cross bar 211 and block 209 are both fixed to the coupler housing 103. The support block is mounted to the cross bar via upper bearing 213a and to the block via lower bearing 213b such that the support block, and thus the tube 189, may pivot relative to the coupler housing 103 in a horizontal plane (along a vertical axis of the support block). This arrangement allows sideway movements of the coupling body 102 to be accommodated.

The cylinder 194 is arranged to be rotated by an extension motor 201 that is rotationally coupled to the cylinder via a toothed belt 198. Therefore, rotation of the motor causes rotation of the cylinder - the motor serves as a means to drive the cylinder when the motor is actuated (such as by a controller). In this way, the coupling body 102 can be moved a desired distance relative to the coupler housing 103 by controlling actuation of the extending mechanism 193 - the direction of the linear motion of the tube 189 depends on the direction the motor is rotating. The motor 201 is arranged to ensure that its spindle is locked in position and cannot rotate when power is not being applied to the motor, i.e. when the motor is not being actuated. The skilled person will understand how the extension motor is arranged to ensure its spindle is locked in position when power is not being applied. In some embodiments, a flexible cover (shown in Figures 2a and 2b) is attached between the coupler head and the coupler housing, which encircles and protects the tube 189 and the conductive rods - the cover is able to extend and retract in tandem with the coupler head.

As described above, the coupler housing 103 provides an opening 113 for receiving the coupling body 102 therethrough such that the tube 189 is within the housing, a space within the housing being sufficient to accommodate the length of the tube 189. The tube 189 is orientated such that movement of the tube relative to the coupler housing causes the coupler head 101 to move towards or away from the coupler housing (depending on which way the motor 201 is rotating).

The tube 189 is configured such that limit positions of the tube can be detected to stop the motor 201 when these positions have been reached. In this way, an extendable or connection range of the tube, and thus the interface connector, can be determined and controlled. This is achieved via a sensing arrangement that is able to detect when the tube reaches a fully extended limit position (i.e., the coupler head is extended a maximum distance from the couple housing) and a fully retracted limit position (i.e., the tube is fully within the coupler housing, and the coupler head occupies the opening 113 as shown in Figure 1a). The tube 189 can thus be moved any distance between these limit positions by suitably controlling the motor 201 (or actuating the extending mechanism), allowing the interface connector to be able to couple to the coupling arrangement of a vehicle any distance between its coupling range. The connection range of the extending coupler may thus correspond to a distance between the coupler head in the fully extended position and the fully retracted position - beyond the connection range, the coupler head would not be able to connect to the coupling arrangement of another vehicle, unless said arrangement is brought into the range.

Thus, the coupling body 102 is arranged to be moved (via the extending mechanism) any distance between a retracted position (seen in Figure 4a) and an extended position (seen in Figure 4b). In the retracted position, the coupling body 102 is substantially contained within the housing, protecting the body from undesirable weather and unauthorised interference. More specifically, in this position, the tube 189 is fully within the housing and the coupler head 101 is partially within the housing.

The coupler head 101 comprises a pair of protective shields 108a, 108b that are arranged to conceal the connection interface 187 when the coupling body is in the retracted position. The shields are pivotally connected to the body of the coupler head 101. As the head is retracted to within the housing, the shields engage portions of the housing and are pivoted in an arc towards one another, creating a physical barrier around the connection interface. The shields thus remain firmly closed when the interface connector is out of use. The shields are biased such that once the coupler head 101 clears the housing, the shields pivot outwards to their open position (shown in Figure 2a). Thus, the interface connector components are well protected in both the active and out of use positions, only being exposed to the environment transiently during the process of connecting or disconnecting to the coupling interface of a vehicle. In the closed position of the shields, mating surfaces of the shields form a weather tight seal - the edges of these surfaces may be covered with nylon (or a similar material) to avoid being frozen together in cold weather and to reduce clattering noises when the shields first make contact.

A distance between the coupler head 101 and the coupler housing 103 increases as the coupling body 102 moves from the retracted position to the extended position. In the extended position, the coupler head 101 reaches an upper end of the connection range of the interface connector.

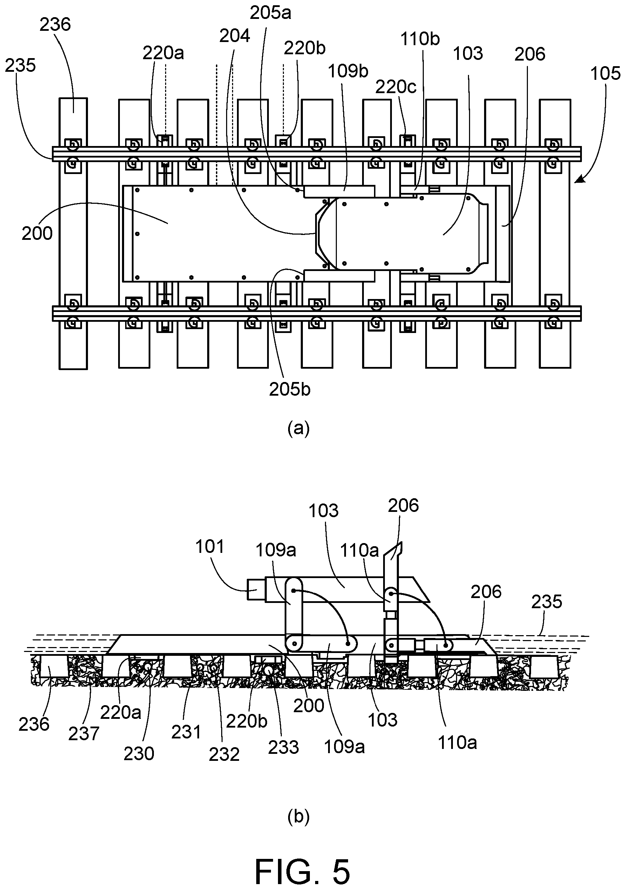

As described above, the stowing mechanism is housed within the stowing mechanism housing 200. As illustrated in Figure 5a, when the interface connector 100 is installed for use on a railway track, the mechanism housing 200 is mounted to the track 235 such that a top surface of the housing 200 is below the lowest bottom surface of a vehicle 98 (or equipment on its underside) that is intended to couple to the interface connector 100 (shown in Figure 2b). In this regard, the mechanism housing 200 has a suitable vertical height to ensure its top surface is below the lowest bottom surface of the vehicle when the housing is mounted to the track. The vertical height of the mechanism housing can therefore be determined during manufacture of the interface connector 100 depending on the vehicles the connector 100 will be utilised with.

In a preferable arrangement, the mechanism housing 200 has a vertical height such that it is generally flush with the upper surfaces of the track 235 when the interface connector 100 is in the stowed position. In this way, the interface connector 100 presents upper surfaces level with the track with no upwards potential obstructions to rail traffic, and can be installed on the appropriate standard rail components on a typical track formation without complex excavations or special arrangements. The interface connector 100 is suitably dimensioned to provide ample space for wheel flanges between the inside edges of the rails and the outside edges of the interface connector components, even in cases of track curvature giving a reduction in clearances. In this position, therefore, the interface connector is not an obstacle to passing trains, its upper surfaces being in the same position as the road surface of a level crossing would be.

The mechanism housing 200 is mounted to the track 105 via cross ties 220a, 220b, which have clamping arrangements to hook around the underside of the rails 235. The cross tie 220a is bolted to the underside of the mechanism housing via normal circular holes which thus fix an outer end of the mechanism housing 200 midway between the rails. A second cross tie 220b, however, is secured by bolts passing via slots in the underside of the housing 200 which permits some sideways adjustment of the position of the housing 200. The cross tie 220c (previously described in connection with Figure 2b) secures the rear struts 110a, 110b in symmetrical positions between the rails. Thus, the outer cross ties 220a and 220c position the interface connector 100 in a suitable position midway between the rails, and any curvature of the track in the centre of the arrangement is allowed for by the adjustable securing method of the central cross tie 220b.

In this embodiment, the mechanism housing 200 is a generally rectangular shape having a central recess 204 at its inner end (proximate to the coupler housing 103). The inner end of the mechanism housing 200 also comprises transversely opposed outer recesses 205a, 205b. The central recess is shaped to accommodate the front end of the coupler housing 103, and the outer recesses are shaped to accommodate the front struts 109a, 109b, when the coupler housing 103 is in the stowed position (shown in Figure 5a). In the stowed position, the coupler housing 103 rests on the sleepers 236 between the rails 235.

The front struts 109a, 109b are connected between the inner end of the mechanism housing 200 and side regions of the front end of the coupler housing 103. Each front strut 109a, 109b is pivotally connected via respective bearings at one end, to the mechanism housing 200, and at the other end, to the coupler housing 103. The rear struts 110a, 110b are connected between side regions of the rear end of the coupler 103 and the cross tie 220c. Similar to front struts 109a, 109b, each rear strut 110a, 110b is pivotally connected via respective bearings at one end, to the coupler housing 130, and at the other end, to brackets that are attached to the cross bar 220c. As illustrated in Figure 5b, this arrangement allows the front struts 109a, 109b to pivot about their bearings connected to the mechanism housing 200 in an arc between a horizontal position and a vertical position. The rear struts 110a, 110b are able to similarly pivot about their bearings connected to the brackets of the cross tie 220c in an arc between a horizontal position and a vertical position. In other words, each strut 109a, 109b, 110a, 110b has two bearing arrangements, one at each of its ends, one of which connects to the coupler housing 103.

When the struts 109a, 109b, 110a, 110b are in the horizontal position, the coupler housing 103 is positioned in the stowed position, generally flush with the top surface of the mechanism housing 200 and top, lateral surfaces of the struts. Thus, the top surface of the coupler housing 103 is also positioned below a bottom surface of the body of the vehicle in the stowed position. When the struts are in the vertical position, the coupler housing 103 is positioned in the in-use position. In the in-use position, the connection interface of the coupler head 101 is positioned such that it is substantially on the same horizontal axis as the coupling arrangement of the vehicle that is intended to couple to the interface connector. In other words, the coupling arrangement 99 of the interface connector is suitably level with the coupling arrangement of the vehicle to facilitate connection between the two.

The bearings of the struts 109a, 109b, 110a, 110b connected to the coupler housing 103 allow the coupler housing to remain in a horizontal plane throughout the pivoting movement of the struts. The length of the struts 109a, 109b, 110a, 110b is substantially the same. This facilitates maintaining the coupler housing 103 in a horizontal place when in the stowed position - the cross tie 220c is suitably distanced relative to the mechanism housing 200 to further facilitate this positioning.

Each rear strut 110a, 110b is arranged to accommodate longitudinal compression and/or extension. In this way, small vertical pivoting movements of the coupler housing 103 can be accommodated. Arrangements to allow a strut to accommodate longitudinal compression and extension are well known to the skilled person, such as a telescopic mounting arrangement between portions of the struts using springs etc. This arrangement is advantageous because an arrangement to accommodate vertical movements of the coupling body 102 is not required in the coupler housing 103. Consequently, the coupler housing 103 can be shallower, allowing it to be more easily stowed beneath a vehicle intending to pass over the interface connector 100. In some embodiments, the struts may not be arranged to accommodate longitudinal compression and/or extension. In some embodiments, all of the struts 109a, 109b, 110a, 110b are arranged to accommodate longitudinal compression and/or extension.

The dotted lines in Figure 5a illustrate the position of the interface connections, which are protected in tubes buried in the ballast 237 and threaded underneath the rails 235 between the sleepers 236. The protective tubes (not shown in Figure 5a) curve vertically for a short distance from the underside of the mechanism housing 200 through right angles until they proceed horizontally towards the side of the track. The entry point of each protective tube passes through, and is secured to, a symmetrical mounting plate which can be bolted to the underside of the mechanism housing 200 in two diametrically opposite positions, so the interface connection emerges from one side of the track or the other as desired for any particular situation. Typically, the interfaces all exit from the same side of the track, mostly heading towards a control centre (described later on), but in some cases the cable to the signal might be more conveniently routed via the opposite side. The mounting plates (not shown in Figures 5a and 5b) also support internal connector sockets which pass through large holes in the underside of the coupler housing 103 to provide a means of connection to the components therein.

These arrangements simplify installation of the interface connector 100. If desired, the cables, optical fibres and compressed air pipe may be threaded through their respective protective tubes and connected up to their connector sockets in advance and then tested, rather than making on-site connections. These assemblies are suitably narrow to be inserted under the rails between sleepers after ballast has been temporarily removed, and then placed in the correct positions with the connectors in the middle of the track. The cross ties 220a, 220b, 220c are then installed and bolted to the rails, and then the mounting plates for the connectors in the locations of cross ties 220a, 220b secured to the cross ties. With all the interconnections in the appropriate location and levelled, ballast is now re-inserted between the sleepers around the protective tubes and suitably tamped down to the appropriate depths. The interface connector 100 may then be placed in position and the mechanism housing 200 bolted down to the cross ties 220a and 220b, the brackets for struts 110a, 110b being secured to cross tie 220c. Appropriate seals are fitted between the mounting plates and the underside of mechanism housing 200, and between the mounting plates and the ends of the protective tubes, to prevent the ingress of any moisture.

The clamping arrangements of the cross ties 220a, 220b, 220c provide electrical insulation, so that any track circuits in the area still operate in the normal way. Cross tie 220a provides electrical connections to the two rails 235, which go to relay or switch contacts inside the mechanism housing 200. This connection is open circuit when the interface connector 100 is in the stowed position, and the two rails 235 are connected together electrically when the interface connector is in any raised position (i.e., moved out of the stowed position), activating any track circuits there might be to indicate 'line occupied' in associated signalling systems. In normal circumstances the interface connector will only be raised when a rail vehicle is stationary nearby and ready to connect, in which case the track circuits will already have been activated to indicate 'line occupied'. This arrangement provides additional safety in the unlikely event of a fault causing the raising mechanism to be erroneously activated.

The dotted lines in Figure 5b represent the rails 235 shown in Figure 5a. The protective tubes 230, 231, 232, 233 buried in the ballast carry the interface connections as described above (i.e., electrical power, data and pneumatic connections). In this embodiment, the high power (`hotel bus') cables are in tube 233 below cross tie 220b, and the remaining electrical and optical fibre connections are grouped together in tube 230 below cross tie 220a. Tubes 231, 232 contain the compressed air pipe and cable to the display arrangement of the proximity sensor 107 respectively (in some cases, these two may be altered to emerge from opposite sides of the track when necessary). In this embodiment, the struts 109a, 109b are hollow, and provide routes for the cables, optical fibres and an air pipe forming the connections between the coupling body 102 and the stowing mechanism.

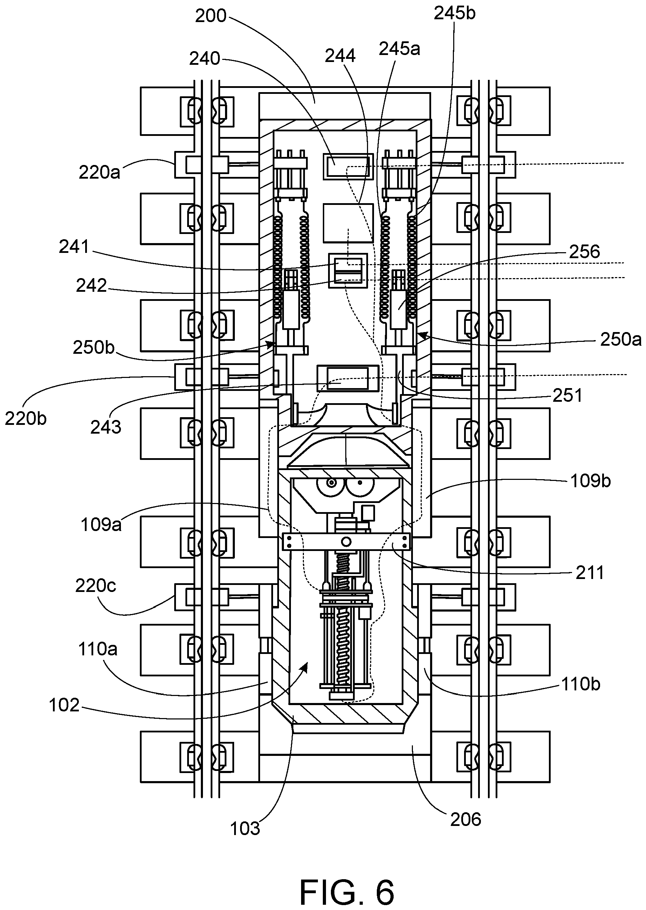

Figure 6 illustrates the interface connector 100 in the stowed position, with top covers of the mechanism housing 200 and coupler housing 103 removed, showing the layout of components therein. The diagonally shaded areas represent the flanges around the edges of the housings which support the flat top covers. These are covered with suitable seals to prevent the ingress of moisture when the top covers are replaced and screwed down tightly in multiple places to fix them to the flanges. Within the mechanism housing 200 there are four connectors 240, 241, 242, 243 which couple with the interface connections in the protective tubes 230, 231, 232 and 233 respectively. The connectors have a generally plug-and-socket character, but the two mating halves of each connector are securely bolted together. The interconnections within the mechanism housing 200 couple to the connectors 240, 241, 242 and 243 from the sides rather than the top to reduce the height required by the mechanism housing 200. The bolts securing each connector together have upwards facing heads providing connection points to facilitate testing, with a removable insulating cover over the top of each contact group.

Connector 243 accommodates the high power `hotel bus' connections in two parallel groups, each contact pair being designed to carry 100 amps (A) to provide an overall 200A capability. Each individual upper contact in connector 243 receives two 50A cables for sufficient flexibility. As there are three hotel bus lines, a total of 12 cables pass through the hollow centre of strut 109a and are terminated at the contactor plate 183 of the coupling body 102 in the coupler housing 210 (shown in Figure 3). The remaining connectors accommodate the lower power electrical interfaces and the optical fibre data interfaces (connector 240), the compressed air pipe (connector 241) and the cable to the display arrangement of the proximity sensor 107 signal (connector 242).

In Figure 6, the dotted lines represent the paths of the main connections between the incoming cables, air pipe and optical fibres in their protective tubes from the control centre (described later on), through their respective connectors 240, 241, 242, 243, on through the struts and eventually to the coupling body 102. Each dotted line may represent multiple connections. An electronic control module 244 is arranged to control the stowing mechanism in mechanism housing 200, as well as the display arrangement of the proximity sensor 107, as will be described later.

The flat top covers of both the mechanism housing 200 and the coupler housing 103 are both removable to facilitate installation, maintenance and system testing. The bearings of the front struts 109a, 109b connected to the mechanism housing 200 are sealed against moisture penetration. Thus, the interface connector 100 is protected against adverse weather conditions, such as heavy rain or snow.

The interface connector 100 may cope with being submerged for a period. This is because when the interface connector is brought into use, the coupler housing 103 rises up before any part of the interior of the system is exposed to the environment, which occurs by the extension of the coupler head 101 when the shields pivot open. Thus, even if a section of track is flooded to some extent in extreme conditions, the system can still work provided the bottom of the coupler housing is raised above the water level when in use. As an additional precaution, the switchgear in the control centre (discussed later on) arranges that the high power and (relatively) high voltage `hotel bus' supply is only fed to the interface connector through the cables in protective tube 233 when the coupler housing 103 has been fully raised up to the 'in use' position. This power will not be provided at the coupler head until the coupling and connection process has been fully completed and the contactor arrangements in the coupler body 102 switch on the electricity supply, by which time all the relevant components are well protected against the environment once more.

The stowing mechanism will now be described. As described above, the stowing mechanism is arranged to move the coupler housing 103 between the stowed position (shown in Figure 1a) and the in-use position (shown in Figure 1b). This is achieved using means to drive rotation of the bearings of struts 109a, 109b that are connected to the mechanism housing 200, and thus drive pivoting of the struts 109a, 109b, 110a, 110b.

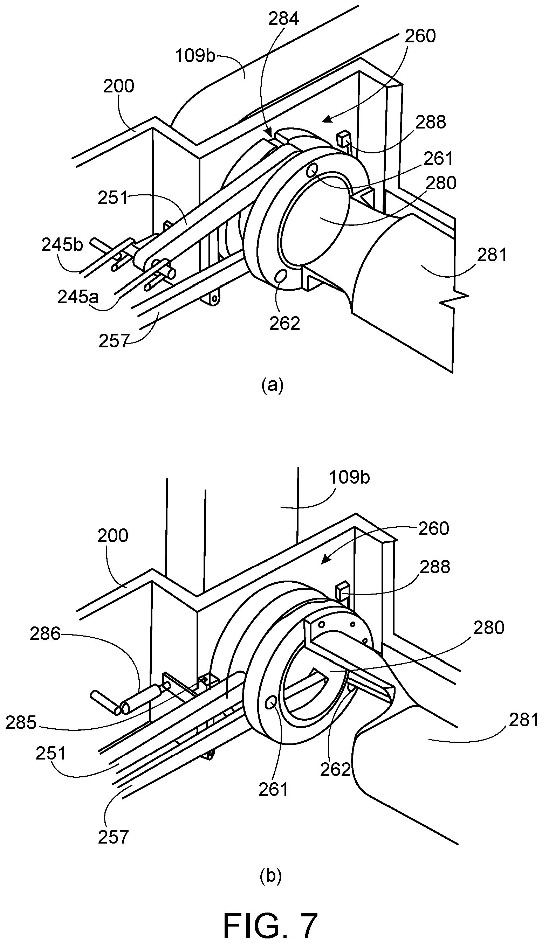

The stowing mechanism comprises a pair of driving arrangements 250a, 250b that are coupled to the bearings of struts 109a, 109b that are connected to the mechanism housing 200. The driving arrangements are identical in structure and function, thus only one of the driving arrangements will be described. Figures 7a and 7b illustrate a corner region of the inner end of the mechanism housing 200 where the strut 109b is connected to the housing 200 via its bearing 260. Figure 7a shows the strut 109b in the horizontal position (i.e., a stowed position of the interface connector 100) and Figure 7b shows the strut 109b in the vertical position (i.e., an in-use position of the interface connector 100).

The driving arrangement 250a comprises a pneumatic cylinder 256 (visible in Figure 6), the piston of which drives a connecting rod 257. A distal end of the connecting rod 257 is pivotally connected to a pivot point 262 on the bearing 260. A tension bar 251 is connected at one end to a pair of tension springs 245a, 245b, and pivotally connected at the other end to a second pivot point 261 on the bearing 260. The tension springs 245a, 245b are secured at their other ends to the mechanism housing 200 such that their tension can be adjusted. This arrangement, in combination with other aspects to be described shortly, allows the weight of the coupling body 102 and its coupler housing 103 to be countered, reducing the forces required to raise them to the in-use position from the stowed position.

When the strut 109b is in the horizontal position, the pivot point 261 is at a top, central region of the bearing 260 and orthogonal to a longitudinal axis of the strut 109b. This arrangement induces a pulling tension in the springs, which imparts a pulling force on the tension bar 251 in a direction towards an outer end of the mechanism housing 200. In this way, the tension bar 251 passively attempts to drive rotation of the bearing 260 in an anticlockwise direction, but is prevented from doing so by the weight of the housing 103 and the components it contains acting to push down strut 109b. Further, connecting rod 257 is constrained in the position shown in Figure 7a by the piston in cylinder 256 being held within the cylinder by air pressure, maintaining the coupler housing 103 in the stowed position. The pivot point 262 is arranged to be at 135 degrees angle relative to the pivot point 261 (or an angle of 225 degrees relative to a longitudinal axis of the strut 109b in the horizontal position). In this way, in both the lowered and raised positions of strut 109b, the connecting rod 257 is substantially horizontal and dips downwards slightly in the transition between those two states.

Driving the connecting rod 257 via the piston of the cylinder 256 towards the bearing 260 (i.e. extending the piston), causes rotation of the bearing 260 in an anticlockwise direction, which in turn causes the strut 109b to be raised from the horizontal position into the vertical position. The tension bar 251 thus passively facilitates driving rotation of the bearing 260 as the connecting rod 257 is driven to the position shown in Figure 7b, which reduces the force required by the piston to move the coupler housing 103 into the in-use position.

With the strut 109b in the vertical position, the pivot point 261 is orthogonal relative to its original position, and as a result the tension bar 251 has moved closer to the cylinder 256 -Pulling tension in the springs 245a, 245b is thus reduced. The pivot point 262 is now at 225 degrees angle relative to the original position of the pivot point 261.

Driving the connecting rod 257 via the piston of the cylinder 256 away from the bearing 260 (i.e. retracting the piston), causes rotation of the bearing 260 in a clockwise direction. The pulling tension in the springs of the tension bar 251 begins to increase as the bearing 260 is rotated clockwise by the connecting rod 257 back to the position shown in Figure 7a. This reduces the forces during movement of the coupler housing 103 from the in-use position to the stowed position, leading to a gentler descent before the coupler housing 103 finally rests on the sleepers 236 in the fully stowed position. Thus, the interface connector 100 can be moved between the stowed position and the in-use position by driving rotation of the bearings of the struts 109a, 109b connected to the mechanism housing 200.

Since the forces involved with moving the coupler housing 103 are relatively high, the bearing 260 is of a relatively large size. The bearing 260 has a relatively large central hole 280 to accommodate the various cables passing from locations in the mechanism housing 200 into the hollow interior of strut 109b. These cables are not shown in Figures 7a and 7b. The cables are suitably spaced when installed and passing through the strut 109b, allowing the cables to naturally occupy their preferred positions - no clamping of the cables within the strut is required.

Inner edges of the bearings of struts 109a, 109b connected to the mechanism housing 200 are coupled together via a counterweight bar 281, that is rigidly connected between the bearings. The connection of the bar 281 to the bearing 260 is shown in Figure 7a. The bar 281 transitions from a quadrant tube section near the bearing 260 (to allow space for the cables to pass freely) to a solid heavy centre section with a rather quadrant-shaped cross section, but diametrically opposite from the end quadrants. The counterweight bar 281 thus improves the robustness of the arrangement by forcing the two strut bearings to operate together, helping to withstand longitudinal stresses which would otherwise result in a tendency for the strut bearings to twist and wear excessively. The weight distribution of the counterweight bar 281 resulting from the chosen cross section over most of its length also provides additional compensation against the weight of the coupling body 102 and its housing 103, reducing the forces required to raise it.

The tension in the springs is adjusted such that the magnitude of their effect, combined with the effect of the counterweight bar 281, to balance the weight of the extension mechanism housing 103, the extension mechanism 102 and other associated components when they are in the lowered 'out of use' position is slightly less than what would be required to raise these components from that position. This ensures one stable position when the coupler housing 103 rests securely on the sleepers. A second stable position results when the springs pull the weight of the coupling body 102 as it is raised, the associated components of the coupling body 102 being supported on the struts 109a, 109b, 110a, 110b in the raised, in-use position.

In some embodiments, the struts are arranged to move slightly beyond their 90 degree vertical positions, to ensure that, despite any frictional effects, the movement will always pass through the fully vertical position before its movement is clamped, as will be explained later on. As a result of these springing and counterweight arrangements, the driving forces required from the pneumatic cylinders are considerably reduced - the respective pistons push the bearings a moderate amount to raise the coupler housing before the effects of the springs and counterweight bar mostly complete rotation of the bearings. In the other direction, the pistons pull a moderate amount to begin to lower the coupler housing 103 before the weight of the coupler housing 103 mostly drives rotation of the bearings. In addition to providing the raising and lowering forces, the cylinders of the driving arrangements 250a, 250b also provide appropriate damping to the movement pattern to provide smooth transitions between the in-use and stowed states of the system.

A temporary locking mechanism is provided to secure the front struts 109a, 109b firmly in the vertical position when they are first raised, so that the coupler housing 103 is fixed, allowing it to resist the pressures imparted by the process of the coupler head 101 joining together with the connection interface 99' of the vehicle 98 (seen in Figure 2b). Once they have connected successfully this locking mechanism is released again, the components then remaining in the positions determined by the vehicle(s) connected to the interface connector 100. This arrangement allows the interface connector 100 to accommodate small movements of the vehicles when connected, e.g. varying loads giving movement on the vehicle suspensions.

The temporary locking mechanism is visible in Figure 7b and comprises a wedge 285 secured on a robust arm that is connected to the mechanism housing 200 proximate to the bearing 260. The wedge is arranged to engage a complementary shaped slot 284 (seen in Figure 7a) in the circumference of the strut bearing 260. The robust arm comprises a small pneumatic cylinder 286 that is arranged to move the wedge towards the bearing 260. Both ends of the cylinder 286 are secured on slightly flexible supports. This provides a spring action to inserting the wedge 285 in the slot 285, so that cylinder 286 may be activated as soon as the cylinder 256 starts to raise the coupler housing 103. The wedge 285 slides on the circumferential surface of the bearing 260 until the strut 109b is fully vertical, at which point the wedge 285 snaps into slot 284 fixing the strut in place. Once the interface connector 100 and the coupling interface of the vehicle have successfully joined, cylinder 286 retracts its piston, causing the wedge 285 to snap out of slot 284, permitting any necessary subsequent movements of the strut 109b. A similar temporary locking mechanism is provided for the bearing of the opposite strut 109a, both operating simultaneously to secure the whole system firmly in place when connecting.

Once a vehicle is connected to the interface connector 100, the struts 109a, 109b, initially vertical, are now maintained at an angle according to the position of the vehicle 98. Should the vehicle body move towards or away from the interface connector by a small distance, the struts 109a, 109b also move, allowing small angular displacements in either direction due to changing loads acting on suspension systems, temperature changes etc, to be accommodated. Such movements will also cause the coupler housing 103 to tilt slightly from its normal horizontal orientation, as the struts 109a, 109b pivot to reduce the mechanism height above rail level. Small movements of this kind are tolerated by the system, the rigidly joined coupling arrangements 99' and 99 remaining in line with their extension mechanisms pivoting in a vertical plane as required to accommodate any height differences between them. If, however, these movements exceed a predetermined threshold, by the strut 109b displacing beyond the vertical by more than a specified angle in either direction, microswitch 288 is triggered as its activating lever comprises a roller engaging with a corresponding slot in pivot 260 (not shown). When microswitch 288 is triggered, it causes the coupler head 101 to uncouple from the vehicle 98 and the coupler housing 103 to be lowered to the `out of use' position. Such excessive movements of the vehicle when coupled to the interface connector should be rare, as normally the vehicle brakes would be fully applied and the vehicle body should remain relatively static. These movements would only occur under fault or accident conditions, such as other vehicles colliding with the connected vehicle or those coupled to it, or some mishandling of a load being added to or removed from a wagon, for example. Thus, provided the vehicle movement is not too extreme or sudden such as would result from a major crash, the interface connector moves out of the way automatically to prevent damage to itself or the vehicle it was connected to under these rare fault conditions.

The temporary locking mechanisms do not need to be operated when disconnecting the interface connector 100 from the vehicle, as the Scharfenberg-style uncoupling arrangements release the coupler head and coupling arrangement of the vehicle without significant external forces and the precise position of the components is unimportant during this process.

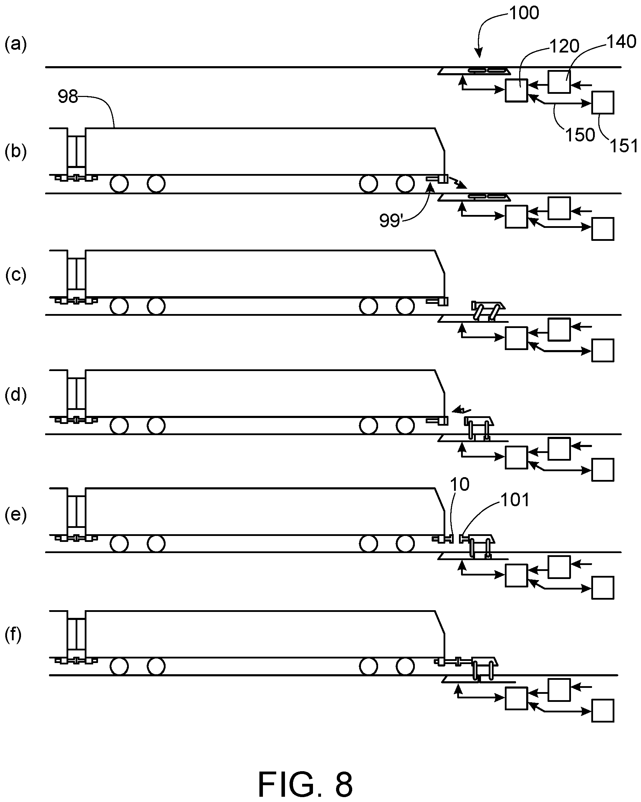

As illustrated in Figure 8a, when the interface connector 100 is installed for use, the land-based electrical power, data and pneumatic connections provided to the interface connector via the protective tubes 230, 231, 232, 233 are done so via a control centre 120 (i.e., a controller arrangement), which is located near to the interface connector (such as beside the railway track or some other convenient location). In other words, the electrical power, data and pneumatic connections are coupled between the interface connector 100 and the control centre 120 within the protective tubes. The control centre may only be accessible by authorised staff and may be in the form of a cabinet. In other embodiments, a simplified version of the control centre may be mounted within the housing of the interface connector.

The control centre 120 comprises several items providing interfaces, services and local controls, together with testing and monitoring facilities, which will differ depending on the application the interface connector is being utilised with. An electrical switchgear provides control, current monitoring and overload protection for the high-power ("hotel power") electrical supply to the interface connector 100. The control centre 120 also contains further power supplies for other equipment in the interface connector 100 and the control centre 120. A transformer 140 supplies power to the control centre, which is connected into a local high-voltage electricity distribution network in the same way as a conventional 'on-shore' power supply arrangement. The control centre 120 also comprises a high speed interface line 150 (which may take various known appropriate forms). This allows more powerful control and data processing facilities 151 to be connected to the control centre 120 as desired, such as a vehicle monitoring control centre, which might be located nearby but more typically might be a long distance away. In practice, there may be several interconnections and multiple processing systems, in the same or different locations, to cover different aspects of the coupled vehicles' facilities as required in any particular situation.

Figures 8a to 8f illustrate the overall coupling process between the interface connector 100 and a vehicle 98 having a coupling arrangement 99' that is compatible with the interface connector (i.e., the coupling arrangement 99' comprises an identical coupler head arrangement to that of interface connector 100 etc). In this example, the coupling arrangement 99' is extendable in the same way as the coupling body 102 of the interface connector. The process begins with the interface connector 100 in the stowed position, out of the way between the rails and rail traffic may pass freely over it, as shown in Figure 8a.

As illustrated in Figure 8b, the vehicle 98 approaches the interface connector with the intention of connecting to it. The vehicle 98 first stops within the connection range of the interface connector and then transmits a wireless request to connect' command to the interface connector 100. (Alternatively, if required the connection can be initiated instead from the control centre 120 of the interface connector 100). This causes the control centre to activate the driving arrangements 250a, 250b of the stowing mechanism, causing the coupler housing 103 to begin moving into the in-use position (shown by Figure 8c), until the coupler housing 103 reaches the in-use position (shown by Figure 8d). Now the interface connector 100 and vehicle 98 are ready to couple, the interface connector 100 returns a wireless 'agreed to connect' command back to the vehicle 98. The coupler head 101 and the connection interface 10 of the vehicle 98 then start extending towards one another as illustrated in Figure 8e. Upon contact, the coupler head 101 and connection interface 10 become mechanically connected together (shown in Figure 8f). Confirmation of successful mechanical connection causes the extension process to stop. The interface contacts are then electrically coupled together, coupling the electrical power and data connections of the vehicle to the land-based electrical power and data connections.

For uncoupling the vehicle 98 from the interface connector 100, the process starts from the connected arrangement shown in Figure 8f. When the interface connector 100 and vehicle are ready to uncouple (such as via uncouple commands sent from respective control systems), first the electrical and data contacts are disconnected. Then the mechanical coupling mechanism is disengaged so that the coupling body 102 and connection interface 10 are free to separate from each other. The retraction process is then activated so that the coupler head 101 and connection interface 10 start to move away from each other as shown in Figure 8e. The coupler head 101 and connection interface 10 reach their respective fully retracted positions (shown in Figure 8d), retraction of these elements stops and uncoupling process is complete. The interface connector 100 is then moved into the stowed position (shown in Figure 8b). After the vehicle departs, the railway line is clear again for passing rail traffic as it would be if the interface connector 100 was not installed in that location.

As described above, in some embodiments, the coupler housing 103 comprises an obstacle detector 206 (best seen in Figure 1b). The obstacle detector has a generally rectangular shape with a slanted upper face. The obstacle detector is mounted to upper ends of the rear struts 110a, 110b such that the obstacle detector can pivot separately about the upper bearings of the struts 110a, 110b connected to the coupler housing 103. The slanted face of the obstacle detector 206 extends beyond a top surface of the coupler housing 103 as the coupler housing is raised above the horizontal stowed position. A springing arrangement nominally retains the obstacle detector in the same longitudinal plane as the struts 110a, 110b. Thus, the obstacle detector 206 also moves in an arc in tandem with the struts 110a, 110b as the interface connector 100 moves between the stowed position and the in-use position shown in Figure 5b.

Although the area of track above the coupler housing 103 will normally be free from obstructions, and thus the coupler housing is free to move upwards when a nearby rail vehicle requests permission to connect, this might not always be the case. There is a possibility that another rail vehicle might be stopped above it. In this case, if the interface connector 100 inadvertently receives a request to couple the coupler housing 103 begins to rise, however, the obstacle detector 206 will first contact the underside of the vehicle stopped above it. This scenario may occur due to inadvertent commands issued from a first vehicle in the appropriate location for coupling or from the vehicle located directly above the coupler housing 103. In some cases, these vehicles may be intending to couple to each other, but the interface connector 100 may inadvertently receive these commands (for example, if the vehicles utilise the same coupling transmission protocol as the interface connector 100).

As the struts 110a, 100b continue to angle upwards, this causes the struts to move increasingly out of alignment with the plane of the obstacle detector 206.

This relative bending of the two components at each pivot point against their springs is detected by a microswitch or other sensor, detecting the obstacle before the top surface of the coupler housing 103 can collide with it. Having detected the obstacle, the driving arrangements inside the mechanism housing 200 are arranged to immediately cease raising the coupler housing 103, and then reverse and lower it again to the normal stowed position as shown in Figure 2a.

In some embodiments, the obstacle detector 206 comprises a visual warning means, such as two red LEDs 207, 208 (seen in Figure 2b). These LEDs 207, 208 are illuminated when the coupler housing 103 is raised, warning any rail vehicles approaching from a rear side of the interface connector 100 to keep clear from the interface connector, either as it moves into the in-use position or when that position has been reached. These red LEDs 207, 208 are illuminated in addition to any red lights which may be displayed on the end of a nearby vehicle coupled to the interface connector. The red LEDs 207, 208 indicate to any rail vehicle approaching the rear of the interface connector 100 that it must stop sufficiently far away to give enough clearance for the interface connector to be lowered to the stowed position.

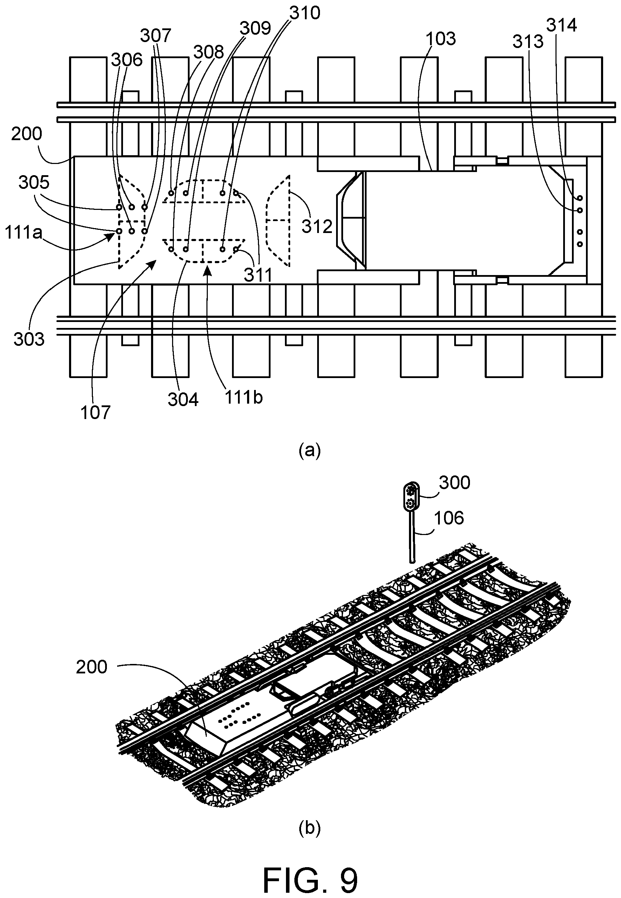

As illustrated in Figure 9a, in some embodiments, the interface connector 100 comprises a proximity sensor 107. The proximity sensor is connected to the control centre 120 and arranged to detect a vehicle as it approaches the interface connector 100. In this regard, the proximity sensor 107 is between the interface connector 100 and a railway vehicle as it approaches the interface connector via the railway track, allowing the proximity sensor to detect the vehicle as it approaches the interface connector.

In some embodiments, the proximity sensor comprises a display arrangement that is connected to the proximity sensor and produces a visual warning signal in response to an output of the proximity sensor. In this way, the display arrangement can visually indicate to nearby operators when a vehicle is within (or outside) the connection range of the interface connector. In this embodiment, the proximity sensor comprises a first sensing arrangement 111a and a second sensing arrangement 111b, both of which are provided on the top surface of the mechanism housing 200. In some embodiments, the proximity sensor comprise only the first sensing arrangement 111a or the sensing arrangement 111b. The configuration of the display arrangement and the proximity sensor will now be described.

As illustrated in Figure 9b, in this embodiment, the display arrangement comprises a display head 300 that is mounted on a post 106 in a location that is readily visible to nearby operators, such as from the approaching end of the train (such as a cab window), from any location looking along the side of the train, or from any platform alongside. The post 106 is mounted behind a rear end of the interface connector 100. In some embodiments, the display head 300 may be connected to other suitable structures in suitable locations, such as a platform canopy or the end wall of a depot (rather than the post 106).

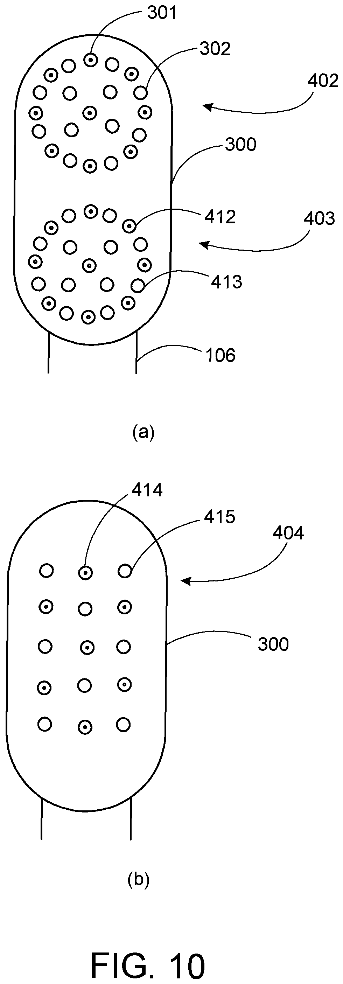

As illustrated in Figure 10a, the display head 300 comprises a first matrix of blue light emitting diodes (LEDs) 301 and red LEDs 302 intermixed in an upper central region of the display head 300 in a substantially circular spatial arrangement. A similarly arranged second matrix of blue LEDs 412 and yellow LEDs 413 is provided in a lower central region of the display head. Other embodiments may comprise different colours and spatial arrangements of the LEDs. The spatial arrangement of the LEDs is such that when both groups of LEDs in each matrix emit light of an equal brightness, the display head produces a mid-purple visual signal 402 from the first matrix and a white visual signal 403 from the second matrix, when viewed at a distance. The display head 300 is connected to the proximity sensor 107 (such as via cables) such that an output of the first sensing arrangement 111a drives the LEDs 301, 302 and an output of the second sensing arrangement 111b drives the LEDs 412, 413.

The first sensing arrangement 111a comprises three of optical components 305, 306, 307 that are colinearly arranged relative to one another. The second sensing arrangement 111b comprises four of optical components 308, 309, 310, 311 that are also colinearly arranged relative to one another. The optical components all face upwardly through a light permissible (i.e., transparent) cover in the top surface of the mechanism housing 200. Alternatively, in some cases, the top surface has transparent windows arranged above each optical component or the entire region above the sensing arrangements 111a, 111b is transparent and/or is removeable.

Each optical component is mounted at a different pre-determined distance from the coupler housing 103. The component 305 is mounted at a distal end of the proximity sensor, the component 307 being at an end closer to the coupler housing 103 and the component 306 being between the other components 305, 307. The second sensing arrangement 111b is positioned between the first sensing arrangement 111a and the coupler housing 103. The component 308 is mounted at a distal end of the proximity sensor, the component 311 being at an end closer to the coupler housing 103 and the components 309, 310 being between the other components 308, 311.

In this embodiment, each optical component comprises a pair of transversely arranged optical elements. This provides contingency in case of one of the optical elements being blocked by an obstacle (such as a leaf). In other embodiments, each component may comprise a single optical element. For the first sensing arrangement 111a, the central component 306 comprises two infrared LEDs (i.e., emitters for light in the infrared spectrum). The component 307 comprises two infrared photodetectors (such as photodiodes or phototransistors - i.e., receivers for receiving light), which forms a sensor for the red LEDs 301 in the display head 300. The component 305 also comprises two infrared photodetectors, which forms a sensor for the blue LEDs 302 in the display head 300. In other words, the outputs from the photodetectors of the components 305, 307 drive the outputs of the blue and red LEDs 302, 301 respectively.

For the second sensing arrangement 111b, each of the central components 309, 310 comprise two LEDs. The component 308 comprises two infrared photodetectors, which forms a sensor for the blue LEDs 412 in the display head 300. The component 311 also comprises two infrared photodetectors, which forms a sensor for the yellow LEDs 413 in the display head 300. Thus, the outputs from the photodetectors of the components 305, 307 drive the outputs of the blue and red LEDs 302, 301 respectively, and the outputs from the photodetectors of the components 308, 311 drive the outputs of the blue and yellow LEDs 412, 413 respectively.

Although the components 305, 306, 307 are spaced some distance apart (to provide contingency against components being blocked by obstacles), the optical elements within each of these components are angled inwards towards a central longitudinal axis of the mechanism housing 200. In this way, each component illuminates (or senses the illumination from) approximately the same areas of the underside of the approaching vehicle. The optical elements of the components 308, 309, 310, 311 are spaced at lateral regions of the mechanism housing 200. More specifically, in this embodiment, the coupling arrangement of the approaching vehicle has the same structure as the coupler head 101 of the present invention. Therefore, in this regard, the optical components are spaced and angled to illuminate (or sense illumination from) the coupler shields of the approaching vehicle.

When a rail vehicle is not in close proximity to the proximity sensor 107, the infra red light emitted by the component 306 is not obstructed - no emitted light is reflected towards and detected by the photodetectors. Thus, the red and blue LEDs 301, 302 of the display head 300 are not illuminated. Similarly, light emitted by components 309, 310 is also not obstructed and therefore blue and yellow LEDs 412, 413 are also not illuminated. When a vehicle approaches the proximity sensor 107, the emitted infra red light from component 306 is reflected from an underside of the shield of the coupler head of the vehicle towards the photodetectors of components 305, 307. This is because the first sensing arrangement 111a is positioned such that it is directly below the coupler shields of the vehicle as the vehicle approaches the proximity sensor - the coupler shields are in the closed position.

As the vehicle first approaches, emitted light is first detected by component 305, which drives the blue LEDs 301 in the display head 300. As the vehicle moves closer towards the interface connector, the reflective portion of the coupler shield occupies more of the overlapping area of the light source illumination and the sensor sensitivity. Thus, more emitted light is received by the photodetector of component 305, resulting in an increased output or brightness of the blue LEDs 301 up to a maximum brightness. Further inward movement of the vehicle causes the reflective portion of the coupler shield to begin moving out of the sensitivity area of component 305 - less infra red light is detected and so the brightness of the blue LEDs 301 begins to decrease. As this occurs, the coupler shield begins to move into the sensitivity area of component 307, which drives the red LEDs 302 in the display head 300. Consequently, red LEDs 302 begin to illuminate. Similarly, a brightness of the red LEDs 302 increases to a maximum as the vehicle moves nearer to the interface connector.

In this embodiment, the underside of the vehicle, and other nearby components, are arranged to be non-reflective to infra red light. In this way, the optical components 305, 307 do not detect a significant amount of light when these non-reflective components block the block emitted light from the optical component 306. Only the underside of the coupler shield is reflective such that the proximity sensor 107 is able to accurately detect when the coupler shield of the approaching vehicle is above either the first sensing arrangement 111a or the second sensing arrangement 111b. The reflective surface of the coupler shield is a light scattering material (rather than simply a reflective material). This ensures that the angles of the incident and reflection of the emitted infra red light are not critical, and the photodetectors will respond to the entire illuminated area effectively.

The dotted line 303 of the coupler shield of the vehicle (shown in Figure 9a) represents an ideal stopping position of the vehicle. In this position, the reflective underside of the shield occupies equal areas of the detection range of each component 305, 307. This will result in equal outputs of the components to their respective LEDs 301, 302, resulting in an equal brightness of red and blue light emitted from the display head 300. If the vehicle stops in this position requests to connect to the interface connector, the interface connector 100 will first be raised into the in-use position, and then the coupling arrangement of the vehicle and the coupler head of the interface connector 100 will extend towards each other at the same time, meeting together midway between their previous positions.

In an alternative scenario, a train formation comprising a first and second vehicle that are coupled together (via the same extending coupler head arrangements as the interface connector 100) wishes to uncouple the first vehicle from the second vehicle and then to connect the first vehicle to the interface connector 100. In this case, the coupled vehicles may approach the proximity sensor 107 from either side of the interface connector. The second sensing arrangement 111b is positioned such that it is directly below the coupler shields of the coupled vehicles as the vehicles approach or pass over the proximity sensor - the coupler shields in this case are in the open position because they are connected together.

The second sensing arrangement 111b functions in the same way as the first sensing arrangement for detecting the coupler shields. Thus, as the coupled vehicles pass over the second sensing arrangement the outputs of the components 308, 311 drive the LEDs 412, 413 respectively, the output of each LED depending on the position of the coupler shields relative to each component. The dotted line 304 of the coupler shields of the coupled vehicles represents an ideal stopping position of the train. As before, this will result in equal outputs of the components to their respective LEDs 412, 413, resulting in an equal brightness of blue and yellow light emitted from the display head 300, which appears to give a white colour when viewed at a distance.

Once the train stops in this position, the second vehicle (which is on the right-hand side of Figure 9a) and the first vehicle may uncouple from each other, as a result of a specific command to separate the train there (which may come from any vehicle in the complete train formation). Once such a command has been received, the respective coupler heads of each vehicle retract into each vehicle. The coupler head of the first vehicle thus moves into the detection range of the first sensing arrangement 111a, causing the purple visual signal 402 to be displayed instead of the white visual signal 403. The coupler head of the second vehicle moves out of the range of the proximity sensor (to the position shown by dotted lines 312 in Figure 9a). The second vehicle now departs (towards the right in Figure 9a), leaving the location of the interface connector 100 - there is therefore no longer an obstruction above the interface connector 100. The interface connector 100 is then raised into the in-use position, and then the coupler head of the interface connector 100 will extend towards the extended coupling arrangement of the vehicle.

Since the movement of the train might be controlled by a driver positioned on either side of the display head 300, the visual signal 403 is duplicated on an opposite side of the display head via a third matrix of blue and yellow LEDs 414, 415, which produce the visual signal 404 in tandem with visual signal 403 (illustrated in Figure 10b). The third matrix of LEDs faces in the opposite direction to that of the interface connector 100 and is arranged in a generally rectangular spatial arrangement. In this way, the visual signal 403 can be seen from both sides of the interface connector 100, wherever a driver or other member of staff happens to be.

The display head 300 is thus arranged to display a first visual signal 402 and a second visual signal 403, both of which independently change colour depending on the proximity of an approaching vehicle to each sensing arrangement 111a, 111b, the colour representing the proximity of the vehicle relative to each sensing arrangement. In this embodiment, an overall emitted blue colour of the first and/or second matrix of the display head 300 indicates that the coupling arrangement of the vehicle is 'too far' or out of the connection range of the interface connector. An overall emitted red colour from the first matrix or yellow colour from the second matrix indicates that the coupling arrangement of the vehicle is 'too close' to the interface connector. A minimum coupling distance is required due to the arrangement of the shields 108 of the coupler head 101, which, as described above, pivot open to expose the connection interface 187 as the coupler head 101 is extended from within the coupler housing 103.

The brightness of the blue LEDs 301 and the red LEDs 302 thus changes as the vehicle passes over the proximity sensor. The brightness of the blue LEDs is at a maximum when the vehicle is proximate to the component 305. As the vehicle approaches the component 307, emitted light from the display head 300 gradually transitions from blue, through various shades of purple, to finally red. The ideal connecting position of the vehicle is represented by a particular shade of purple with equal blue and red components; the vehicle being slightly further away will give a more bluish purple hue and the vehicle being slightly closer will give a more reddish purple hue. The second matrix of blue and yellow LEDs 412, 413 functions in the same way, but transitions from blue, to white (indicating the optimum position), to yellow.

The distance of the optical components 305, 306, 307 from the interface connector, and their spatial arrangement relative to each other, provides a detection range of the proximity sensor 107 that corresponds to the connection range of the interface connector. The optical components 308, 309, 310, 311 broaden this detection range laterally for detecting vehicles that are coupled together. In this embodiment, the detection range is broader or wider than the connection range of the interface connector. In this way, the proximity sensor can determine when the vehicle is in close proximity to the connection range (i.e., when the vehicle is proximate to component 305). No light is emitted from the display head 300 when the vehicle(s) are beyond the detection range of the proximity sensor 107.

When both outputs from the components 305, 307 are within a pre-determined range of magnitude (i.e., such as within a particular voltage range), an 'in range' signal is arranged to be generated. The in range signal indicates that the vehicle is now in the ideal position or suitably 'in range' of the connection range of the interface connector. The pre-determined range of magnitude both outputs must fall within to generate the signal corresponds to the vehicle being within a subrange of the overall detection range, which is in this embodiment is generally between the components 305 and 307. The blue and red LEDs 301, 302 are also arranged to flash when the in range signal is being generated (i.e., when the vehicle is within the defined subrange). The vehicle should now stop and apply its brakes fully, after which the coupling or connecting process between the coupling arrangement of the vehicle and the interface connector 100 can begin once the interface connector has been raised into the in-use position. A similar in range signal is generated for the second sensing arrangement 111b to cause the white visual signal to flash.

The subrange for activation of the in range signal(s) is provided by two predetermined threshold voltage levels; an upper threshold voltage level and a lower threshold voltage level. The in range signal(s) are arranged to be generated only when both of the outputs of the components 305, 307 or components 308, 311 are between the threshold voltage levels. These threshold voltage levels are not fixed. Instead, the lower threshold level is a particular fraction of the upper threshold level. Should the reflective surface of the coupler head reflect less infra red light than usual, for example due to dirt or corrosion, the brightness of the LEDs in the display head will also be less than usual. However, for each matrix of LEDs, the brightness of both colours will be affected equally, and the resulting mid-purple or white colour representing the optimum connecting positions will not alter, as well as the generation of the in range signals. If an optical path is obstructed by an obstacle, the larger output from the pair of optical elements (of each optical component) is utilised for the reference, the smaller or non-existent output being ignored.

Timer circuits are incorporated into the first and second sensing arrangements 111a, 111b so that a sensor must be activated for at least a certain short period before the visual signals are illuminated. This ensures that trains passing over the interface connector 100 at even moderate speeds will not cause a signal display. Only vehicles passing over the sensors very slowly, in preparation to stop and connect, will cause the signals to illuminate.

In this embodiment, the infra-red LEDs 306, 309, 310 are not driven by a DC constant current source. Instead, they have a sinusoidal modulation of current (and therefore brightness) at a particular frequency - the frequency is selected to be unique from light modulation frequencies from common light sources, such as fluorescent lights or LED floodlights. The photodetector circuits are arranged to have a wide dynamic range to cope with varying ambient light levels, and their outputs are AC coupled so that any DC components are inconsequential. The resulting AC component from the photodetector circuit is then filtered to exclude all frequencies other than those near the correct LED modulation frequency, the filtered amplitude then being used to determine the brightness of the corresponding LED in the display head 300. Consequently, the processed outputs from the optical components 305, 307, 308, 311 are not affected by any artificial or natural light sources detected by the components 305, 307, 309, 310.

In embodiments comprising the proximity sensor 107, the coupling process is authorised by the control centre 120 (or a remote control centre via the control centre 120) in response to receiving the in range signal from the first sensing arrangement 111a. The control centre then generates an instruction to the interface connector 100 to unlock the coupling process. Commands to couple can now be accepted, which may be initiated from within the vehicle adjacent to the interface connector, or from other vehicles coupled to it, or from the local control centre 120, or from any remote control centre linked to the interface connector. Once such a command has been accepted (such as by an exchange of signals between the interface connector and the vehicle using a short distance wireless communication method), the coupling process begins as described above. The initiation of the coupling process may be carried out automatically (via software protocols) or manually (via an operator using a display screen and user inputs) from any of the above mentioned locations, the operating methods allowed or prohibited in any particular situation being determined by software in the respective control systems.

When the coupling process is initiated from within the vehicle or other vehicles of a train coupled to it, a driver can request to couple to the interface connector after viewing the 'in range' visual signal 402 from the display head 300 and stopping the vehicle or train with the 'in range' visual signal still active (e.g. a flashing purple colour). Similarly, in the alternative scenario described above, the driver can request to disconnect from the second vehicle after viewing the 'in range' visual signal 403 from the display head, and then request to connect to the interface connector 100. The control centre 120 (or a remote control centre via the control centre 120) accepts the coupling request and the coupling process begins.

In an alternative embodiment, the in range signal from the first sensing arrangement 111a may be transmitted (e.g., via a wireless protocol) to the vehicle such that initiation of the coupling process can occur automatically via software protocols in the vehicle (more specifically the train computers) in response to receiving the in range signal (which may also be transmitted automatically). In this embodiment, the display head 300 may sometimes be omitted, with local display indicators in the vehicle giving alternative equivalent displays for the benefit of any on-train staff; or the display head 300 may be kept for flexibility of use or for reassurance of platform staff observing operations from outside the vehicle, for example.

In some embodiments, the interface connector 100 comprises a further infra red source 313 and photodetector 314 forming a rear detector (shown in Figure 9a). In this embodiment, these are provided on a central upper region of a vertically facing surface of the obstacle detector 206 when the interface connector is in the stowed position. The rear detector thus positioned and arranged to detect the closed coupler shields of a vehicle passing over them. This is particularly useful for the alternative scenario described above, where a first vehicle (stopped at the optimal dotted line 304 position) wishes to disconnect from the second vehicle and connect to the interface connector 100. If an in range signal is being generated by the first sensing arrangement 111a, the coupling process can be initiated automatically in response to the rear detector indicating the second vehicle has departed from the interface connector 100. In this way, the coupling process can still be initiated with the first vehicle if the first vehicle lacks a means to initiate the coupling process itself (for example such as a driving cab or train management computer).

The proximity sensor may be used in combination with human operators and/or other automated systems to facilitate positioning and coupling operations to improve the safety and reliability of operating practices. In some embodiments, the proximity sensor and display may be omitted altogether if other available methods of positioning vehicles accurately prior to connection to the interface connector are considered to be sufficient.

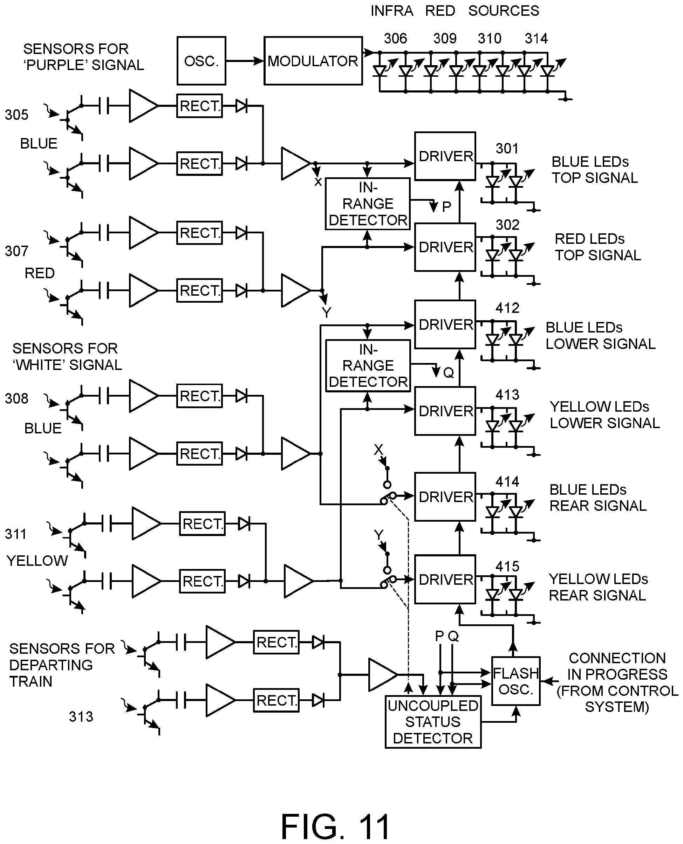

Figure 11 illustrates example circuit arrangements for the LED light sources of the optical components 306, 309, 310, 314, the photodetectors of the optical components 305, 307, 308, 311, 313 and the respective drive circuits of the LEDs in the display head. As described earlier this comprises two similar systems for driving the bi-colour visual signal displays to give brightness levels depending on the level of reflected infra red light received by their corresponding four pairs of sensors; an additional pair of sensors (313, 314) to detect the continued presence of a vehicle not intended to be connected to the interfacing system, which, in this embodiment, is arranged to inhibit the flashing of the purple visual signal 402 until the second vehicle has departed from the interface connector 100. More specifically, an oscillator generates sine waves which cause the modulator to vary the amplitude of the current passing to the LEDs 306, 309, 310, 314. In this example, the photodetectors are phototransistors. For each LED driving arrangement, two phototransistors are suitably biased to allow a wide range of ambient light levels and thus DC conditions. The desired AC signal is coupled via capacitors to amplifiers. The amplifiers incorporate suitable bandpass filters allowing only frequencies corresponding to that of the oscillator to pass through, other frequencies being substantially attenuated to exclude interference sources. Rectifier circuits measure the amplitude of the resulting signals and output a corresponding DC voltage: normally both outputs will be equal but if one of the optical paths is disrupted the diode arrangement ensures that only the larger signal is passed on to the buffer amplifier which in turn feeds the drivers for the LEDs in the display head 300.

In summary, the proximity sensor 107 (and corresponding display head 300) ensures that approaching vehicles are able to stop within the suitable connection range of the interface connector 100. If the coupling arrangement of the vehicle and the interface connector are too far apart, their respective extending mechanisms will reach the end of their capability. If they are too close, as described above, their respective shields may be unable to open due to colliding together in the early stages of extension, before there is sufficient clearance to fully open to expose their respective connection interfaces. This arrangement provides easily visible and understandable visual signals associated with each interface connector to assist and/or give reassurance to staff in the vicinity (either on the train or nearby) that vehicles have stopped in the right place before connection is attempted. These visual signals might be viewed from relatively close by or a relatively long distance away, depending on the operating circumstances, and their visibility might be obscured sometimes by weather conditions such as fog. The arrangement for gradually transitioning from one colour to another facilitates guiding the driver to stop in the correct position for subsequent connection (rather than a simple two state 'digital' indication with a sudden change as a vehicle approaches the interface connector).

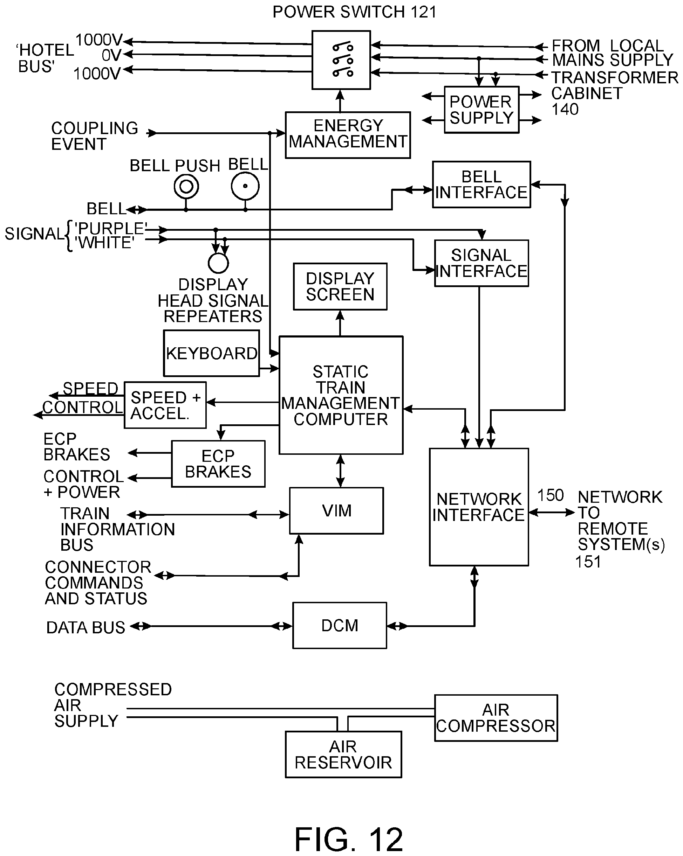

Figure 12 illustrates the components of the control centre 120 in more detail. Connections extending to the left-hand side of the Figure are connected to the interface connector 100, or to destinations within the coupler housing 103 or proximity sensor 107 (in embodiments comprising the proximity sensor). The two connections extending from the right-hand side of the Figure are power from the transformer 140 and the high speed interface line 150 to remote data processing facilities 151. The high speed interface line 150 may be an optical fibre, microwave radio or any other known networking technology appropriate to accommodate the data bandwidth required for high speed data processing.

The interface connector can be utilised with rail vehicles and road vehicles alike, these vehicles having either an extending coupling arrangement or a non-extending coupling arrangement that is compatible with the connection interface of the interface connector such that (electrical power and data) coupling therebetween may occur.

In summary, the interface connector has a very wide range of potential applications for many kinds of vehicles used individually, with potential for economies of scale through using common standards and components for all vehicle types.

## Claims

1. An interface connector (100) for connecting to a rail vehicle (98), the rail vehicle comprising a coupling arrangement for coupling electrical power and data processing connections of the rail vehicle to the interface connector, the interface connector comprising:
a controller (120);
a coupling arrangement (99) for coupling land-based electrical power and data processing connections to the rail vehicle;
means for connecting the coupling arrangement of the interface connector to the coupling arrangement of the rail vehicle upon contact between the coupling arrangements; and
a stowing arrangement that is arranged to be actuated by the controller to move the coupling arrangement of the interface connector between a stowed position and an in-use position,
wherein, in the stowed position, a top surface of the coupling arrangement of the interface connector is positioned below a lowest bottom surface of the rail vehicle, and in the in-use position, the coupling arrangement of the interface connector is positioned such that it is substantially on the same horizontal axis as the coupling arrangement of the rail vehicle.

2. An interface connector as claimed in claim 1, wherein the coupling arrangement comprises:
a housing (103) with a connection interface (187) for coupling land-based electrical power and data processing connections to the rail vehicle,
wherein the stowing arrangement is arranged to move the housing between the stowed position and the in-use position; and
wherein, in the stowed position, a top surface of the housing is positioned below a lowest bottom surface of the rail vehicle, and in the in-use position, the connection interface is positioned such that it is substantially on the same horizontal axis as the coupling arrangement of the rail vehicle.

3. An interface connector as claimed in claim 1 or 2, wherein the stowing arrangement comprises:
a body (200) for mounting the stowing arrangement to a surface; and
a height adjusting means for adjusting the height of the housing relative to a ground surface.

4. An interface connector as claimed in claim 3, wherein the height adjusting means comprises:
at least one elongate leg (109a, 109b) pivotally connected via bearing arrangements at one end, to one end of the housing, and at the other end, to the body;
at least one elongate leg (110a, 110b) pivotally connected via bearing arrangements at one end, to the other end of the housing, and at the other end, to a mounting fixture for mounting the leg to a ground surface; and
a driving means (250a) that is arranged to be actuated by the controller to rotate the bearing arrangement of the leg that is connected to the body to pivot the leg about the bearing arrangement between a horizontal position and a vertical position,
wherein, in the horizontal position, the housing is positioned in the stowed position, and in the vertical position, the housing is positioned in the in-use position.

5. An interface connector as claimed in claim 4, wherein the driving means comprises:
a piston pivotally connected at one end to a rotatable part of the bearing arrangement, and connected at the other end to a cylinder (256) that is mounted to the body for driving the piston; and
a tension bar (251) for facilitating rotation of the bearing arrangement, the tension bar being pivotally connected at one end to a rotatable part of the bearing arrangement, and connected at the other end to a biasing means (245) that is mounted to the body for biasing the tension bar.

6. An interface connector as claimed in claim 5, wherein the tension bar is biased such that:
the tension bar rotatably draws the bearing arrangement in the same direction as the piston when the leg is moved from the horizontal position to the vertical position; and
the tension bar rotatably draws the bearing arrangement in the opposite direction to the piston when the leg is moved from the vertical position to the horizontal position.

7. An interface connector as claimed in any of claims 4 to 6, wherein the housing and/or the at least one leg connected between the housing and the mounting fixture comprise an obstacle detection means (206) connected to the controller for detecting an obstacle above the housing, the controller being arranged to stop the housing moving into the in-use position in response to an output from the obstacle detection means.

8. An interface connector as claimed in any of claims 4 to 7, wherein the height adjusting means comprises:
a pair of front legs (109a, 109b), each leg being connected at one end proximate to a corner of a front end of the housing, and at the other end proximate to a corner of a rear end of the body; and
a pair of rear legs (110a, 110b), each leg being connected at one end proximate to a corner of a rear end of the housing, and at the other end proximate to a corner of the mounting fixture.

9. An interface connector as claimed in any of claims 4 to 8, wherein at least one leg is arranged to accommodate vertical compression and/or extension of the leg.

10. An interface connector as claimed in any preceding claim, including a proximity sensor (107) connected to the controller and arranged to detect the rail vehicle as the rail vehicle approaches the interface connector, an output of the proximity sensor corresponding to a position of the rail vehicle relative to the proximity sensor.

11. An interface connector as claimed in claim 10, wherein the proximity sensor is arranged a predetermined distance from the interface connector such that the proximity sensor detects the rail vehicle when the rail vehicle is within a connection range of the interface connector.

12. An interface connector as claimed in claim 10 or 11, wherein the proximity sensor comprises a sensing element (111), the sensing element being provided by the body of the stowing arrangement for detection; and wherein the sensing element comprises an optical sensor arrangement, the body of the stowing arrangement having a light transmissible cover, the optical sensor arrangement being arranged within the body of the stowing arrangement for detection via the covering.

13. An interface connector as claimed in claim 12, wherein the optical sensor arrangement comprises:
an emitter for emitting light; and
a pair of receivers for receiving emitted light, an amount of emitted light received by each receiver corresponding to a position of the coupling arrangement of the rail vehicle relative to the receivers,
wherein the emitter and the pair of receivers are arranged colinearly relative to each other, one of the receivers being at an end of the body of the stowing arrangement proximate to the housing and the other receiver being at a distal end of the body of the stowing arrangement, the emitter being arranged between the pair of receivers.

14. An interface connector as claimed in claim 13, wherein the coupling arrangement of the rail vehicle comprises a covering arrangement (108) that is arranged to move between a closed position, for covering the coupling arrangement when it is out of use to protect and/or seal the coupling arrangement, and an open position, for exposing the coupling arrangement when it is in use; and
wherein the interface connector further comprises a second optical sensor arrangement (111b), the first optical sensor arrangement (111a) being positioned in a central region of the housing for detecting the covering arrangement in the closed position, the second optical sensor arrangement being positioned either side of the central region of the housing for detecting the covering arrangement in the open position.

15. An interface connector as claimed in any of claims 11 to 14, wherein the controller or the rail vehicle is arranged to initiate connection between the coupling arrangement of the interface connector and the coupling arrangement of the rail vehicle based on the output of the proximity sensor.

16. An interface connector as claimed in any of claims 11 to 15, further comprising a display means (300) connected to the controller, the controller being arranged such that the display means produces a visual warning signal in response to the output of the proximity sensor.

17. An interface connector as claimed in claim 16, wherein a colour of the warning signal corresponds to a position of the vehicle relative to the proximity sensor, the colour being determined by the output of the proximity sensor.

18. An interface connector as claimed in any preceding claim, further comprising:
a coupling body (102) having a head (101) and a shank (189), the housing (103) having an opening (113) for receiving the coupling body therethrough,
the coupling body being mounted to the housing via the opening such that the shank is within the housing, the mounting arrangement being such that the coupling body is moveable relative to the housing between a retracted position and an extended position, a distance between the head of the coupling body and the support housing increasing as the coupling body moves from the retracted position towards the extended position; and
an extending mechanism (193) that is arranged to be actuated by the controller to move the coupling body any distance between the retracted position and the extended position,
wherein the head of the coupling body comprises:
the connection interface (187); and
the means (186) for connecting the head to the coupling arrangement of the rail vehicle upon contact between the head and the coupling arrangement.

19. A combination comprising:
the interface connector (100) as claimed in any of claims 1 to 18; and
a rail vehicle (98) having a coupling arrangement (99') for coupling electrical power and data processing connections of the rail vehicle to the interface connector,
wherein the coupling arrangement of the rail vehicle is moveable relative to the rail vehicle between a retracted position and an extended position, a distance between the coupling arrangement and the rail vehicle increasing as the coupling arrangement moves from the retracted position towards the extended position; and
wherein the rail vehicle is part of a formation comprising one or more other rail vehicles, the electrical power and data connections between each rail vehicle being coupled together such that the electrical power and data processing connections of the formation is coupled to the interface connector when the interface connector is coupled to the rail vehicle.

## Patentansprüche

1. Schnittstellenverbinder (100) zum Verbinden mit einem Schienenfahrzeug (98), wobei das Schienenfahrzeug eine Kopplungsanordnung zum Koppeln von Strom- und Datenverarbeitungsanschlüssen des Schienenfahrzeugs mit dem Schnittstellenverbinder umfasst, wobei der Schnittstellenverbinder umfasst:
eine Steuereinheit (120);
eine Kopplungsanordnung (99) zum Koppeln von landgebundenen Strom- und Datenverarbeitungsanschlüssen mit dem Schienenfahrzeug;
Einrichtung zum Verbinden der Kopplungsanordnung des Schnittstellenverbinders mit der Kopplungsanordnung des Schienenfahrzeugs bei Kontakt zwischen den Kopplungsanordnungen; und
eine Verstauanordnung, die dazu angeordnet ist, durch die Steuereinheit betätigt zu werden, um die Kopplungsanordnung des Schnittstellenverbinders zwischen einer Verstauposition und einer Gebrauchsposition zu bewegen,
wobei in der Verstauposition eine Oberseite der Kopplungsanordnung des Schnittstellenverbinders unterhalb einer untersten Unterseite des Schienenfahrzeugs positioniert ist, und in der Gebrauchsposition die Kopplungsanordnung des Schnittstellenverbinders so positioniert ist, dass sie sich im Wesentlichen auf derselben horizontalen Achse befindet wie die Kopplungsanordnung des Schienenfahrzeugs.

2. Schnittstellenverbinder nach Anspruch 1, wobei die Kopplungsanordnung umfasst:
ein Gehäuse (103) mit einer Anschlussschnittstelle (187) zum Koppeln von landgebundenen Strom- und Datenverarbeitungsanschlüssen mit dem Schienenfahrzeug,
wobei die Verstauanordnung dazu angeordnet ist, das Gehäuse zwischen der Verstauposition und der Gebrauchsposition zu bewegen; und
wobei in der Verstauposition eine Oberseite des Gehäuses unterhalb einer untersten Unterseite des Schienenfahrzeugs positioniert ist, und in der Gebrauchsposition die Anschlussschnittstelle so positioniert ist, dass sie sich im Wesentlichen auf derselben horizontalen Achse befindet wie die Kopplungsanordnung des Schienenfahrzeugs.

3. Schnittstellenverbinder nach Anspruch 1 oder 2, wobei die Verstauanordnung umfasst:
einen Körper (200) zum Montieren der Verstauanordnung an einer Oberfläche; und
eine Höhenverstelleinrichtung zum Einstellen der Höhe des Gehäuses relativ zu einer Bodenoberfläche.

4. Schnittstellenverbinder nach Anspruch 3, wobei die Höheneinstelleinrichtung umfasst:
mindestens ein längliches Bein (109a, 109b), das über Lageranordnungen an einem Ende schwenkbar mit einem Ende des Gehäuses und am anderen Ende mit dem Körper verbunden ist;
mindestens ein längliches Bein (110a, 110b), das über Lageranordnungen an einem Ende schwenkbar mit dem anderen Ende des Gehäuses und am anderen Ende mit einer Montagevorrichtung zum Montieren des Beins an einer Bodenoberfläche verbunden ist; und
eine Antriebseinrichtung (250a), die dazu angeordnet ist, durch die Steuereinheit betätigt zu werden, um die Lageranordnung des Beins, das mit dem Körper verbunden ist, zu drehen, um das Bein um die Lageranordnung zwischen einer horizontalen Position und einer vertikalen Position zu schwenken,
wobei das Gehäuse in der horizontalen Position in der Verstauposition positioniert ist und das Gehäuse in der vertikalen Position in der Gebrauchsposition positioniert ist.

5. Schnittstellenverbinder nach Anspruch 4, wobei die Antriebseinrichtung umfasst:
einen Kolben, der an einem Ende schwenkbar mit einem drehbaren Teil der Lageranordnung verbunden ist und am anderen Ende mit einem Zylinder (256) verbunden ist, der zum Antreiben des Kolbens am Körper montiert ist; und
eine Zugstange (251) zum Ermöglichen der Drehung der Lageranordnung, wobei die Zugstange an einem Ende schwenkbar mit einem drehbaren Teil der Lageranordnung verbunden ist und am anderen Ende mit einer Vorspanneinrichtung (245) verbunden ist, die zum Vorspannen der Zugstange am Körper montiert ist.

6. Schnittstellenverbinder nach Anspruch 5, wobei die Zugstange so vorgespannt ist, dass:
die Zugstange die Lageranordnung drehbar in die gleiche Richtung wie der Kolben zieht, wenn das Bein von der horizontalen Position in die vertikale Position bewegt wird; und
die Zugstange die Lageranordnung drehbar in die entgegengesetzte Richtung zum Kolben zieht, wenn das Bein von der vertikalen in die horizontale Position bewegt wird.

7. Schnittstellenverbinder nach einem der Ansprüche 4 bis 6, wobei das Gehäuse und/oder das mindestens eine Bein, das zwischen dem Gehäuse und der Montagevorrichtung angeschlossen ist, eine Hinderniserkennungseinrichtung (206) umfassen, die mit der Steuereinheit zum Erkennen eines Hindernisses über dem Gehäuse verbunden ist, wobei die Steuereinheit dazu angeordnet ist, als Reaktion auf eine Ausgabe der Hinderniserkennungseinrichtung die Bewegung des Gehäuses in die Gebrauchsposition zu stoppen.

8. Schnittstellenverbinder nach einem der Ansprüche 4 bis 7, wobei die Höheneinstelleinrichtung umfasst:
ein Paar Vorderbeine (109a, 109b), wobei jedes Bein an einem Ende in der Nähe einer Ecke eines vorderen Endes des Gehäuses und am anderen Ende in der Nähe einer Ecke eines hinteren Endes des Körpers verbunden ist; und
ein Paar hintere Beine (110a, 110b), wobei jedes Bein an einem Ende in der Nähe einer Ecke eines hinteren Endes des Gehäuses und am anderen Ende in der Nähe einer Ecke der Montagevorrichtung verbunden ist.

9. Schnittstellenverbinder nach einem der Ansprüche 4 bis 8, wobei mindestens ein Bein dazu angeordnet ist, eine vertikale Kompression und/oder Ausdehnung des Beins aufzunehmen.

10. Schnittstellenverbinder nach einem der vorhergehenden Ansprüche, enthaltend einen Näherungssensor (107), der mit der Steuereinheit verbunden ist und dazu angeordnet ist, das Schienenfahrzeug zu erkennen, wenn sich das Schienenfahrzeug dem Schnittstellenverbinder nähert, wobei eine Ausgabe des Näherungssensors einer Position des Schienenfahrzeugs relativ zum Näherungssensor entspricht.

11. Schnittstellenverbinder nach Anspruch 10, wobei der Näherungssensor in einem vorgegebenen Abstand vom Schnittstellenverbinder so angeordnet ist, dass der Näherungssensor das Schienenfahrzeug erkennt, wenn sich das Schienenfahrzeug innerhalb einer Verbindungreichweite des Schnittstellenverbinders befindet.

12. Schnittstellenverbinder nach Anspruch 10 oder 11, wobei der Näherungssensor einen Fühler (111) umfasst, wobei der Fühler durch den Körper der Verstauanordnung zur Erkennung bereitgestellt wird; und wobei der Fühler eine optische Sensoranordnung umfasst, wobei der Körper der Verstauanordnung eine lichtdurchlässige Abdeckung aufweist, wobei die optische Sensoranordnung innerhalb des Körpers der Verstauanordnung zur Erkennung über die Abdeckung angeordnet ist.

13. Schnittstellenverbinder nach Anspruch 12, wobei die optische Sensoranordnung umfasst:
einen Emitter zum Emittieren von Licht; und
ein Paar Empfänger zum Empfangen von emittiertem Licht, wobei eine von jedem Empfänger empfangene Menge an emittiertem Licht einer Position der Kopplungsanordnung des Schienenfahrzeugs relativ zu den Empfängern entspricht,
wobei der Emitter und das Paar Empfänger kollinear relativ zueinander angeordnet sind, wobei sich einer der Empfänger an einem Ende des Körpers der Verstauanordnung in der Nähe des Gehäuses befindet und sich der andere Empfänger an einem distalen Ende des Körpers der Verstauanordnung befindet, wobei der Emitter zwischen dem Paar Empfänger angeordnet ist.

14. Schnittstellenverbinder nach Anspruch 13, wobei die Kopplungsanordnung des Schienenfahrzeugs eine Abdeckanordnung (108) umfasst, die dazu angeordnet ist, sich zwischen einer geschlossenen Position zum Abdecken der Kopplungsanordnung, wenn sie nicht in Gebrauch ist, um die Kopplungsanordnung zu schützen und/oder abzudichten, und einer offenen Position, um die Kopplungsanordnung bloßzulegen, wenn sie in Gebrauch ist, zu bewegen; und
wobei der Schnittstellenverbinder ferner eine zweite optische Sensoranordnung (111b) umfasst, wobei die erste optische Sensoranordnung (111a) in einem zentralen Bereich des Gehäuses positioniert ist, um die Abdeckanordnung in der geschlossenen Position zu erkennen, wobei die zweite optische Sensoranordnung auf beiden Seiten des zentralen Bereichs des Gehäuses positioniert ist, um die Abdeckanordnung in der offenen Position zu erkennen.

15. Schnittstellenverbinder nach einem der Ansprüche 11 bis 14, wobei die Steuereinheit oder das Schienenfahrzeug dazu angeordnet ist, auf Grundlage der Ausgabe des Näherungssensors eine Verbindung zwischen der Kopplungsanordnung des Schnittstellenverbinders und der Kopplungsanordnung des Schienenfahrzeugs einzuleiten.

16. Schnittstellenverbinder nach einem der Ansprüche 11 bis 15, ferner umfassend eine mit der Steuereinheit verbundene Anzeigeeinrichtung (300), wobei die Steuereinheit so angeordnet ist, dass die Anzeigeeinrichtung als Reaktion auf die Ausgabe des Näherungssensors ein visuelles Warnsignal erzeugt.

17. Schnittstellenverbinder nach Anspruch 16, wobei eine Farbe des Warnsignals einer Position des Fahrzeugs relativ zum Näherungssensor entspricht, wobei die Farbe durch die Ausgabe des Näherungssensors bestimmt wird.

18. Schnittstellenverbinder nach einem der vorhergehenden Ansprüche, ferner umfassend:
einen Kopplungskörper (102) mit einem Kopf (101) und einem Schaft (189), wobei das Gehäuse (103) eine Öffnung (113) zum Aufnehmen des Kopplungskörpers dadurch aufweist,
wobei der Kopplungskörper über die Öffnung am Gehäuse so montiert ist, dass sich der Schaft innerhalb des Gehäuses befindet, wobei die Montageanordnung derart ist, dass der Kopplungskörper relativ zum Gehäuse zwischen einer eingefahrenen Position und einer ausgefahrenen Position beweglich ist, wobei ein Abstand zwischen dem Kopf des Kopplungskörpers und dem Stützgehäuse zunimmt, wenn sich der Kopplungskörper von der eingefahrenen Position in die ausgefahrene Position bewegt; und
einen Ausfahrmechanismus (193), der dazu angeordnet ist, durch die Steuereinheit betätigt zu werden, um den Kopplungskörper über einen beliebigen Abstand zwischen der eingefahrenen Position und der ausgefahrenen Position zu bewegen,
wobei der Kopf des Kopplungskörpers umfasst:
die Anschlussschnittstelle (187); und
die Einrichtung (186) zum Verbinden des Kopfes mit der Kopplungsanordnung des Schienenfahrzeugs bei Kontakt zwischen dem Kopf und der Kopplungsanordnung.

19. Kombination umfassend:
den Schnittstellenverbinder (100) nach einem der Ansprüche 1 bis 18; und
ein Schienenfahrzeug (98) mit einer Kopplungsanordnung (99') zum Koppeln von Strom- und Datenverarbeitungsanschlüssen des Schienenfahrzeugs mit dem Schnittstellenverbinder,
wobei die Kopplungsanordnung des Schienenfahrzeugs relativ zum Schienenfahrzeug zwischen einer eingefahrenen Position und einer ausgefahrenen Position beweglich ist, wobei ein Abstand zwischen der Kopplungsanordnung und dem Schienenfahrzeug zunimmt, wenn sich die Kopplungsanordnung von der eingefahrenen Position in Richtung der ausgefahrenen Position bewegt; und
wobei das Schienenfahrzeug Teil einer Formation ist, die ein oder mehrere andere Schienenfahrzeuge umfasst, wobei die Strom- und Datenanschlüsse zwischen den einzelnen Schienenfahrzeugen so miteinander gekoppelt sind, dass die Strom- und Datenverarbeitungsanschlüsse der Formation mit dem Schnittstellenverbinder gekoppelt sind, wenn der Schnittstellenverbinder mit dem Schienenfahrzeug gekoppelt ist.

## Revendications

1. Connecteur d'interface (100) destiné à être connecté à un véhicule ferroviaire (98), le véhicule ferroviaire comprenant un agencement de couplage destiné à coupler des connexions d'alimentation électrique et de traitement de données du véhicule ferroviaire au connecteur d'interface, le connecteur d'interface comprenant :
un contrôleur (120) ;
un agencement de couplage (99) pour coupler les connexions d'alimentation électrique terrestre et de traitement de données au véhicule ferroviaire ;
des moyens pour connecter l'agencement de couplage du connecteur d'interface à l'agencement de couplage du véhicule ferroviaire lors du contact entre les agencements de couplage ; et
un agencement de repli qui est agencé pour être actionné par le contrôleur pour déplacer l'agencement de couplage du connecteur d'interface entre une position repliée et une position d'utilisation,
dans lequel, dans la position repliée, une surface supérieure de l'agencement de couplage du connecteur d'interface est positionnée sous une surface inférieure la plus basse du véhicule ferroviaire, et dans la position d'utilisation, l'agencement de couplage du connecteur d'interface est positionné de telle sorte qu'il soit sensiblement sur le même axe horizontal que l'agencement de couplage du véhicule ferroviaire.

2. Connecteur d'interface selon la revendication 1, dans lequel l'agencement de couplage comprend :
un boîtier (103) avec une interface de connexion (187) pour coupler des connexions d'alimentation électrique terrestre et de traitement de données au véhicule ferroviaire,
dans lequel l'agencement de repli est agencé pour déplacer le boîtier entre la position repliée et la position d'utilisation ; et
dans lequel, dans la position repliée, une surface supérieure du boîtier est positionnée sous une surface inférieure la plus basse du véhicule ferroviaire, et dans la position d'utilisation, l'interface de connexion est positionnée de telle sorte qu'elle soit sensiblement sur le même axe horizontal que l'agencement d'accouplement du véhicule ferroviaire.

3. Connecteur d'interface selon la revendication 1 ou 2, dans lequel l'agencement de repli comprend :
un corps (200) pour monter l'agencement de repli sur une surface ; et
des moyens de réglage de hauteur pour ajuster la hauteur du boîtier par rapport à une surface du sol.

4. Connecteur d'interface selon la revendication 3, dans lequel les moyens de réglage de hauteur comprennent :
au moins une patte allongée (109a, 109b) reliée de manière pivotante par l'intermédiaire d'agencements de palier au niveau d'une extrémité, à une extrémité du boîtier, et au niveau de l'autre extrémité, au corps ;
au moins une patte allongée (110a, 110b) reliée de manière pivotante par l'intermédiaire d'agencements de palier au niveau d'une extrémité, à l'autre extrémité du boîtier, et au niveau de l'autre extrémité, à un dispositif de montage pour monter la patte sur une surface de sol ; et
des moyens d'entraînement (250a) qui sont agencés pour être actionnés par le contrôleur pour faire tourner l'agencement de palier de la patte qui est reliée au corps pour faire pivoter la patte autour de l'agencement de palier entre une position horizontale et une position verticale,
dans lequel, dans la position horizontale, le boîtier est positionné dans la position repliée, et dans la position verticale, le boîtier est positionné dans la position d'utilisation.

5. Connecteur d'interface selon la revendication 4, dans lequel les moyens d'entraînement comprennent :
un piston relié de manière pivotante au niveau d'une extrémité à une partie rotative de l'agencement de palier, et relié au niveau de l'autre extrémité à un cylindre (256) qui est monté sur le corps pour entraîner le piston ; et
une barre de tension (251) destinée à faciliter la rotation de l'agencement de palier, la barre de tension étant reliée de manière pivotante au niveau d'une extrémité à une partie rotative de l'agencement de palier, et reliée au niveau de l'autre extrémité à un moyen de sollicitation (245) qui est monté sur le corps pour solliciter la barre de tension.

6. Connecteur d'interface selon la revendication 5, dans lequel la barre de tension est sollicitée de telle sorte que :
la barre de tension entraîne de manière rotative l'agencement de palier dans la même direction que le piston lorsque la patte est déplacée de la position horizontale à la position verticale ; et
la barre de tension entraîne de manière rotative l'agencement de palier dans la direction opposée au piston lorsque la patte est déplacée de la position verticale à la position horizontale.

7. Connecteur d'interface selon l'une quelconque des revendications 4 à 6, dans lequel le boîtier et/ou l'au moins une patte reliée entre le boîtier et le dispositif de montage comprennent un moyen de détection d'obstacle (206) connecté au contrôleur pour détecter un obstacle au-dessus du boîtier, le contrôleur étant agencé pour arrêter le déplacement du boîtier vers la position d'utilisation en réponse à une sortie du moyen de détection d'obstacle.

8. Connecteur d'interface selon l'une quelconque des revendications 4 à 7, dans lequel les moyens de réglage de hauteur comprennent :
une paire de pattes avant (109a, 109b), chaque patte étant reliée au niveau d'une extrémité proche à un coin d'une extrémité avant du boîtier, et au niveau de l'autre extrémité proche à un coin d'une extrémité arrière du corps ; et
une paire de pattes arrière (1 10a, 1 10b), chaque patte étant reliée au niveau d'une extrémité proche à un coin d'une extrémité arrière du boîtier, et au niveau de l'autre extrémité proche à un coin du dispositif de montage.

9. Connecteur d'interface selon l'une quelconque des revendications 4 à 8, dans lequel au moins une patte est agencée pour s'adapter à la compression et/ou l'extension verticale de la patte.

10. Connecteur d'interface selon l'une quelconque des revendications précédentes, comprenant un capteur de proximité (107) connecté au contrôleur et agencé pour détecter le véhicule ferroviaire lorsque le véhicule ferroviaire s'approche du connecteur d'interface, une sortie du capteur de proximité correspondant à une position du véhicule ferroviaire par rapport au capteur de proximité.

11. Connecteur d'interface selon la revendication 10, dans lequel le capteur de proximité est agencé à une distance prédéterminée du connecteur d'interface de telle sorte que le capteur de proximité détecte le véhicule ferroviaire lorsque le véhicule ferroviaire se trouve dans une plage de connexion du connecteur d'interface.

12. Connecteur d'interface selon la revendication 10 ou 11, dans lequel le capteur de proximité comprend un élément de détection (111), l'élément de détection étant fourni par le corps de l'agencement de repli pour permettre une détection ; et dans lequel l'élément de détection comprend un agencement de capteur optique, le corps de l'agencement de repli comportant un couvercle transmettant la lumière, l'agencement de capteur optique étant disposé à l'intérieur du corps de l'agencement de repli pour permettre une détection via le couvercle.

13. Connecteur d'interface selon la revendication 12, dans lequel l'agencement de capteur optique comprend :
un émetteur pour émettre de la lumière ; et
une paire de récepteurs destinés à recevoir la lumière émise, une quantité de lumière émise reçue par chaque récepteur correspondant à une position de l'agencement de couplage du véhicule ferroviaire par rapport aux récepteurs,
dans lequel l'émetteur et la paire de récepteurs sont disposés de manière colinéaire l'un par rapport à l'autre, l'un des récepteurs étant à une extrémité du corps de l'agencement de repli à proximité du boîtier et l'autre récepteur étant à une extrémité distale du corps de l'agencement de repli, l'émetteur étant disposé entre la paire de récepteurs.

14. Connecteur d'interface selon la revendication 13, dans lequel l'agencement de couplage du véhicule ferroviaire comprend un agencement de recouvrement (108) qui est agencé pour se déplacer entre une position fermée, pour recouvrir l'agencement de couplage lorsqu'il n'est pas utilisé pour protéger et/ou assurer l'étanchéité de l'agencement de couplage, et une position ouverte, pour exposer l'agencement de couplage lorsqu'il est utilisé ; et
dans lequel le connecteur d'interface comprend en outre un second agencement de capteur optique (111b), le premier agencement de capteur optique (111a) étant positionné dans une région centrale du boîtier pour détecter l'agencement de recouvrement dans la position fermée, le second agencement de capteur optique étant positionné de chaque côté de la région centrale du boîtier pour détecter l'agencement de recouvrement dans la position ouverte.

15. Connecteur d'interface selon l'une quelconque des revendications 11 à 14, dans lequel le contrôleur ou le véhicule ferroviaire est agencé pour initier une connexion entre l'agencement de couplage du connecteur d'interface et l'agencement de couplage du véhicule ferroviaire sur la base de la sortie du capteur de proximité.

16. Connecteur d'interface selon l'une quelconque des revendications 11 à 15, comprenant en outre un moyen d'affichage (300) connecté au contrôleur, le contrôleur étant agencé de telle sorte que le moyen d'affichage produise un signal d'avertissement visuel en réponse à la sortie du capteur de proximité.

17. Connecteur d'interface selon la revendication 16, dans lequel une couleur du signal d'avertissement correspond à une position du véhicule par rapport au capteur de proximité, la couleur étant déterminée par la sortie du capteur de proximité.

18. Connecteur d'interface selon l'une quelconque des revendications précédentes, comprenant en outre :
un corps de couplage (102) comportant une tête (101) et une tige (189), le boîtier (103) comportant une ouverture (113) destinée à recevoir le corps de couplage à travers celle-ci,
le corps de couplage étant monté sur le boîtier via l'ouverture de telle sorte que la tige se trouve à l'intérieur du boîtier, l'agencement de montage étant tel que le corps de couplage est mobile par rapport au boîtier entre une position rétractée et une position déployée, une distance entre la tête du corps de couplage et le boîtier de support augmentant à mesure que le corps de couplage se déplace de la position rétractée vers la position déployée ; et
un mécanisme d'extension (193) qui est agencé pour être actionné par le contrôleur pour déplacer le corps de couplage sur n'importe quelle distance entre la position rétractée et la position déployée,
dans lequel la tête du corps de couplage comprend :
l'interface de connexion (187) ; et
les moyens (186) permettant de relier la tête à l'agencement de couplage du véhicule ferroviaire lors du contact entre la tête et l'agencement de couplage.

19. Combinaison comprenant :
le connecteur d'interface (100) selon l'une quelconque des revendications 1 à 18 ; et
un véhicule ferroviaire (98) comportant un agencement de couplage (99') pour coupler les connexions d'alimentation électrique et de traitement de données du véhicule ferroviaire au connecteur d'interface,
dans lequel l'agencement de couplage du véhicule ferroviaire est mobile par rapport au véhicule ferroviaire entre une position rétractée et une position déployée, une distance entre l'agencement de couplage et le véhicule ferroviaire augmentant à mesure que l'agencement de couplage se déplace de la position rétractée vers la position déployée ; et
dans lequel le véhicule ferroviaire fait partie d'une formation comprenant un ou plusieurs autres véhicules ferroviaires, les connexions d'alimentation électrique et de données entre chaque véhicule ferroviaire étant couplées ensemble de telle sorte que les connexions d'alimentation électrique et de traitement de données de la formation soient couplées au connecteur d'interface lorsque le connecteur d'interface est couplé au véhicule ferroviaire.
